# EUROPEAN PATENT APPLICATION

(11) **EP 2 264 715 A2**
(43) Date of publication of application: **22.12.2010**
(21) Application number: 10184685.5
(22) Date of filing: 12.08.2004
(51) Int. Cl.: G21B 1/00

(54) **Electrolytic cell thermal power generator and method**

(30) Priority: 12.08.2003 US 494843 P; 26.08.2003 US 498341 P
(62) Divisional of application: 04781092.4
(71) Applicant: Energetics Technologies, LLC, Califon, NJ 07830 (US)
(72) Inventor: The designation of the inventor has not yet been filed
(74) Representative: Bradford, Victoria Sophie

(57) **Abstract**

There is provided a method and apparatus for generating thermal energy in an electrolytic cell (100; 200), The cell has a cathode electrode (12; 212) and an anode electrode (13; 213) immersed in an electrically conductive electrolyte (11; 211), The apparatus comprises a modulated current power supply (14, 15; 214, 215) connected to the cathode and anode electrodes, a computer (16; 216) connected to the power supply and an ultrasonic transmitter (250"; 514, 516) coupled to the cell. The computer is programmed to generate within the power supply and supply to the electrodes a superwaves pattern of current wherein the superwaves pattern includes a major current wave (W₁) having a predetermined period and a plurality of minor current waves (W₂, W₃, W₄) superimposed on the major current wave forming a train of electrical current packets supplied to the electrodes. The ultrasonic transmitter provides ultrasonic excitation to the cathode electrode (12; 212) during application of the train of electrical current packets to the electrode pair.

## Description

### Background of the Invention

This invention relates generally to a method and apparatus for generating thermal energy in an electrolytic cell. In particular, the invention relates to the use of different cells for the creation of low energy nuclear reaction (LENR) which generates heat. Energy pulses are applied in a predetermined pattern which intensifies the nuclear reaction.

US 6,024,935 describes apparatus for generating a LENR involving a material and hydrogenous atoms, comprising a LENR cell containing electrolyte, and an anode-cathode pair.

The quest for nuclear reaction to provide an inexhaustible, non-polluting source of energy seeks to exploit the phenomena of nuclear physics. It is known that when two nuclei, for example, of deuterium (heavy hydrogen) react together, the combined mass of the reaction product is less, by a minute quantity, than the mass of the original particles. The tiny mass difference is converted to kinetic energy of the reaction products and this kinetic energy is converted to heat energy. The amount of this energy, as expressed in the classic Einstein equation, is equal to mass difference multiplied by the square of the speed of light; hence the minute mass difference yields an enormous amount of energy.

Deuterons are positively charged nuclei and, therefore, repel each other. The closer deuterons approach each other, the stronger their repulsion and the greater the energy it takes to overcome this repulsion. It is only when the deuterons are brought to one ten-trillionth of a centimeter next to each other, that a strong nuclear force that attracts nuclei overcomes the Coulomb repulsion force and the nuclei then react. This is the same nuclear force that prevents nuclei, all of which having positively-charged protons, from flying apart. Reaction also occurs between tritium and deuterium nuclei, the tritium being a heavy isotope of hydrogen, but its nucleus has a proton and two neutrons, whereas a deuterium nucleus has a proton and a single neutron.

Thermonuclear reaction will occur when deuterons are held at a high enough density and a high enough temperature for a time period sufficient to effect reaction. The center of the sun affords conditions conducive to thermonuclear reaction, for this fiery star is at a temperature of about 10 million degrees Fahrenheit. At this temperature, matter is ionized, that is, it is in a plasma state. The solar plasma ions are subjected to enormous gravitational forces that keep the ions together at a very high density, that is, at close proximity to each other. At these conditions, the thermal motion of the hydrogen nuclei is sufficient to occasionally overcome the Coulomb barrier, thus enabling two hydrogen nuclei to undergo a nuclear reaction. On earth, the gravitational forces are much weaker and cannot contain high temperature plasma. Hence, since the middle of the twentieth Century, scientists have been developing special devices that could ionize deuterium or deuterium and tritium and that contain the resulting plasma at sufficiently high density, temperature, and length of time to bring about thermonuclear reaction. Two general approaches for doing so are being pursued: magnetic confinement; and inertial confinement. As the density of the plasma ions that can be confined by magnetic fields in a practical device is very low, it takes a much higher temperature, in the order of 100 million degrees Fahrenheit, to produce a deuterium-tritium (D-T) reaction. The D-T thermonuclear reaction is the one currently being pursued, for higher temperatures are required for D-D thermonuclear reaction. Inertial confinement can compress matter to form a very high density plasma but only for a very short time. It takes a very high temperature, on the order of 100 million degrees Fahrenheit, to produce a deuterium-tritium (D-T) reaction.

Following Edward Teller's invention of the hydrogen bomb, billions of dollars have been spent over the last 50 years toward contriving devices adapted to force heavy hydrogen nuclei to react together under controlled conditions and thereby liberate more energy than was expended to confine and heat the nuclei. One such device of enormous size is known as a tokamak within whose toroidal interior powerful magnetic fields confine and squeeze hot plasma, causing deuterium and tritium ions to react together.

Tokamaks overcome the Coulomb barrier by first heating the deuterium and tritium atoms to high enough temperatures that will rip off their electrons to create a gas of ions or plasma, and then by heating the plasma to extremely high temperatures so that two plasma ions can collide at sufficiently high velocity to overcome the Coulomb barrier. Huge magnets produce the magnetic fields to hold the plasma together for a time sufficient for some of the nuclei to crash into each other and react. This thermonuclear reaction produces helium nuclei as well as neutrons and excess energy.

In a super-giant laser reaction generator, laser beams bombard a deuterium-tritium fuel pellet, causing its outer layer to vaporize and be ejected outwardly from the pellet. The resultant reaction force implodes the fuel, bringing it to very high densities and temperatures for a small fraction of a second. Under these so called "inertial confinement conditions," deuterium and tritium nuclei can react. Yet, despite the multi-billion dollar investments made in developing thermonuclear reactors based on either magnetic confinement or inertial confinement, no such reactor is at present a practical reality, and whether it ever will be, cannot be forecast. Other technologically simpler and less expensive techniques for reacting nuclei are desirable.

In the past decade or so, electrochemical and other techniques have been investigated as a possible technique for reacting nuclei for power generation. The investigations typically utilize an electrolytic cell whose electrolyte is heavy water (i.e., water in which deuterium takes the place of ordinary hydrogen). The heavy water is rendered electrically conductive by a salt dissolved therein (e.g., lithium deuteroxide (LiOD)). Immersed in this electrolyte is an anode-cathode electrode pair composed of a strip or wire made of metal (e.g., palladium) surrounded by a coil or a foil of a similar or another metal (e.g., platinum).

When a d-c voltage is impressed across these electrodes, the resultant current flow in the electrolyte causes the water to dissociate into its constituent elements. As a consequence, oxygen is released as a gas at the platinum anode, while deuterium ions migrate toward the palladium cathode. Consequently, deuterium atoms diffuse into the palladium metal. The buildup of a large concentration of deuterium atoms in the palladium metal is thought to initiate a low energy nuclear reaction. The energy released by such a low energy reaction could be captured by the atomic lattice of the cathode and show up as heat.

Another known technique for loading deuterons into a metal lattice utilizes a glow discharge (GD) cell. In a GD cell, like in an electrolytic cell, deuterium ions are forced into a metallic target (e.g., palladium electrode) or a non-metallic target plated by these metals using an electric field. However, whereas in an electrolytic cell the deuterium ions are in liquid form, in a GD cell the deuterium ions are in an ionized gaseous form. This ionized gas, also referred to as plasma, is formed by applying a sufficiently large voltage between two electrodes located in a closed cell that is filled with a low-pressure deuterium gas. This voltage causes the deuterium molecules to ionize, thereby causing what is called glow discharge. This glow discharge is similar, in principle, to the lighting of a fluorescent lamp. The ions formed in a GD cell are accelerated in the direction of a grounded electrode by the same voltage that causes the discharge, and they impinge on the surface of that electrode with a relatively large velocity and momentum. The impact velocity of the ions that is attainable in a GD cell is orders of magnitude higher than that attainable in electrolytic cells, high pressure cells, and catalyst cells.

Catalysis is a phenomenon of paramount importance in the chemical industry, and can be described as the action of a substance (the catalyst) to increase the rate of a reaction while remaining itself chemically unchanged. Certain nuclear reactions can be enhanced by orders of magnitude in the presence of a catalyst. An example is the so called "muon-catalyzed" reaction in which, by replacing an electron, a muon enables a reaction of two deuterium nuclei at room temperature and atmospheric pressure. The muon is not consumed by this D-D reaction but is available as a catalyst for another D-D reaction and so on. A muon-catalyzed reaction may also similarly enable a deuterium-tritium (D-T) reaction.

In 1989, Martin Fleischmann and Stanley Pons, on observing excess heat generation in an electrochemical cell, claimed they had observed evidence of a low energy nuclear reaction of deuterium ions. Further electrochemistry studies by T. Mizuno, G. H. Miley and others, suggest that other low energy nuclear reactions may take place in the solid electrode. The excess heat generation may be attributed to the reaction of isotopes of hydrogen nuclei with the nuclei of the solid electrode material rather than of the reaction of hydrogenous nuclei (i.e., nuclei of isotopes of hydrogen, such as deuterium and tritium) themselves. As a result of these nuclear reactions, the nuclei of the target material are converted or transmuted into nuclei of other isotopes. Due to mass difference between the transmutation products and between the nucleus of the metal plus hydrogenous nucleus, excess energy is generated as well.

A number of glow discharge cell experiments have been done following the 1989 announcement of Fleischmann and Pons. Most of these GD cell experiments were done in Russia by A.B. Karabut, Ya.R. Kucherov, and I.B. Savvatimova, and focused primarily on the measurement of the transmutation of different target materials rather than on the generation of excess heat. Nevertheless, some indications of excess heat generation in GD cell LENR power generator experiments were reported as well.

The catalyst concept, on the other hand, was largely ignored by the LENR researchers in the wake of the 1989 announcement of Fleischmann and Pons. The catalyst concept was ignored because it was generally accepted that LENR was triggered by a high deuterium/palladium ratio in the lattice, whereas the deuterium/palladium ratio in a catalyst cell is low. Thus, until 1998, catalysis was largely disregarded with respect to LENR systems.

Later, catalysis was revisited in an effort to improve the consistency and scalability of LENR systems. In 1998, it was Leslie Case who advanced the proposition that energy could be reliably produced by contacting deuterium in the gaseous state with an active catalyst at an elevated temperature. However, through his testing for catalyst nuclear reaction using catalyst cells, Case observed that the catalyst reaction effect was small and absolutely dependent on the catalyst and on the configuration and operation of the apparatus used for testing catalyst reaction. The best estimate of the configuration effect was that some sort of gradient in the deuterium concentration had to be present in the catalyst, due to flow, convection, or other mechanism. Very importantly, the process demanded the use of a palladium or other platinum-group metal catalyst.

A number of experiments studying the effect of ultrasonic waves on low energy nuclear reactions have been done following the 1989 announcement of Fleischmann and Pons as well. For example, in 1991, Lipson, the Russian scientist, and others investigated the effect of 15 kHz ultrasonic wave-induced cavitation of gas bubbles in the vicinity of a platinum electrode. They found that the ultrasonic waves stimulated an increase in the flux of neutrons generated by the cell. Recently, in 2002, Y. Arata and others investigated the effect of 19 kHz ultrasonic wave-induced cavitation on deuterium loading into electrodes of ten various metal types. They found that intense acoustic cavitation stimulated excess heat generation via LENR.

In any case, present day LENR generator cells do not generate enough excess heat to be commercially viable power sources. Further improvements in these cell designs and methods of operation are desirable.

### Summary of the Invention

It is therefore an object of the present invention to provide a low energy nuclear reaction power generator that includes a cell having a pair of electrodes immersed in an electrically-conductive electrolyte, to which electrical pulses are applied in a predetermined pattern.

A significant feature of the present invention which distinguishes it from prior cells in which the current through the electrolyte is pulsed, is that in a cell in accordance with the invention, pulsing takes place in a pulse pattern that increases the probability of LENR to occur and, hence, the level of reproducibility.

More specifically, an object of the present invention is to provide a low energy nuclear reaction power generator that yields far more energy in the form of heat than is applied to the cell in the form of electricity.

Briefly stated, this object is attained in a low energy nuclear reaction power generator provided with an electrochemical cell. The electrochemical cell contains an electrode pair whose anode and cathode are formed of platinum, palladium, titanium, nickel, gold, silver, tin, lead, tungsten, thorium, uranium, or any other suitable metal, any suitable metal alloys (e.g., Pd-Ce, Pd-B, or Pd-Ni), or any suitable non-metallic substrate (e.g., SiO₂, SiC, TiO₂, TiC, Al₂O₃, or Y₂O₃), plated with suitable metallic film. The cell also contains an electrically-conductive electrolyte, which may be any suitable fluid (e.g., light water or heavy water) mixed with suitable solutes (e.g., LiOD, CaSO₄, or Li₂SO₄), molten salts
(e.g., LiCl-KCl saturated with LiD), liquid metals (e.g., liquid Pb saturated with PbD₂ or Pb(OD)₂, etc.), and/or any suitable solid material (e.g., a solid conductor). Applied across the electrodes is a train of voltage pulse packets, each comprised of a cluster of pulses.

The amplitude and duration (or alternatively, frequency) of each pulse in the packet, the duration of the intervals between pulses, and the duration of the intervals between successive packets in the train are in a predetermined pattern in accordance with "superwaving" waves, in which each wave is modulated by waves of different amplitude and duration. Each packet of voltage or current pulses gives rise to enhanced loading of the palladium cathode, for example, followed by partial deloading. The successive enhanced loading and partial deloading produced by the train of pulse packets enhance the interaction between the nuclei of these hydrogenous atoms themselves and between the nuclei of these hydrogenous atoms and the nuclei of the electrode material. The energy generated in the form of heat is greater than the electrical energy of the pulses applied to the electrodes.

It should be noted that the dense atom-packing may substantially change the resistance (i.e., the measure of a material's ability to resist the flow of an electric current) of the metallic electrode by introducing hydrogen, or other, atoms to the structure of the metal. This resistance preferably can be measured in real-time by passing a constant high frequency current through the metallic electrode and measuring the voltage potential across the cathode over time. The measured voltage potential over time is an indication of the change in resistance, and, hence, the level of ion packing of the metallic electrode over time. Thus, a real-time indicator of the atom-packing may then be realized by continually passing a high frequency current through the metallic electrode and measuring the voltage potential across the cathode.

Another object of the present invention is to provide an ion acceleration cell LENR power generator. The cell contains an electrode pair. The cell also contains an electrically-conductive ionized gas. Applied across these electrodes is a train of voltage or current pulse packets, each comprised of a cluster of pulses.

Another object of the present invention is to provide a catalyst cell for LENR. The cell is preferably maintained at a substantially constant temperature of 100-300° Celsius, for example, for the creation of low energy nuclear reactions under optimal conditions. A flux of gas through the catalyst bed and dynamic conditions, using a pressure modulating system which generates superwaving pressure waves, are provided, preferably to maximize the excess heat generation and the reproducibility of LENR experiments.

Another object of the present invention is to provide a high pressure electrolytic ultrasonic cell LENR power generator. A palladium cathode (or a target made of any other suitable material (e.g., titanium, nickel, etc.)) is loaded under high pressure up to 10 MPa and under high oscillating cathode temperature in superwaving form. The loaded cathode is then preferably immersed in an electrolyte, and current or voltage pulses in superwaving form are preferably applied to different types of electrode configurations in a broad range of pressures and temperatures, as well as with stimulation by ultrasonic waves and ultrasonically-lnduced cavitations, in order to maximize the excess heat generation and the reproducibility of low energy nuclear reaction effect.

### Brief Description of the Drawings

The above and other advantages of the invention will be more apparent upon consideration of the following detailed description, taken in conjunction with the accompanying drawings, in which like reference characters refer to like parts throughout, and in which:

FIGS. 1 and 1A schematically illustrate superwaving wave phenomena;

FIG. 2 schematically illustrates a partially sectional perspective view of a first embodiment of an electrolytic cell LENR power generator in accordance with the invention;

FIG. 3 illustrates the pattern of electrical pulses applied to the electrodes of the cell of FIG. 2;

FIG. 4 illustrates the pattern of electrical pulses applied to the electrodes of the cell of FIG. 2 with pulse packets switched off during relaxation periods;

FIG. 5 schematically illustrates a sectional perspective view of another embodiment of an electrolytic cell LENR power generator in accordance with the invention;

FIGS. 6 and 7 are graphs illustrating the effect of varying drive current on the temperature of the cell of FIG. 5;

FIGS. 8 and 9 are graphs illustrating the effect of the temperature of the cell of FIG. 5 on its performance;

FIG. 10 illustrates the pattern of electrical pulses applied to the electrodes of the cell of FIG. 5;

FIG. 11 shows the repeating wave fragment of the pattern of electrical pulses of FIG. 10;

FIGS. 12-15 are graphs illustrating the effect of the electrical pulses of FIGS. 10 and 11 on various characteristics of the cell of FIG. 5;

FIG. 16 illustrates an additional pattern of electrical pulses applied to the electrodes of the cell of FIG. 5;

FIG. 17 shows the repeating wave fragment of the pattern of electrical pulses of FIG. 16;

FIGS. 18-20 are graphs illustrating the effect of the electrical pulses of FIGS. 16 and 17 on various characteristics of the cell of FIG. 5;

FIGS. 21 and 21A each illustrate a perspective view of a portion of yet another embodiment of an electrolytic cell LENR power generator in accordance with the invention;

FIG. 22 schematically illustrates a sectional perspective view of an embodiment of a glow discharge cell in accordance with the invention;

FIG. 23 schematically illustrates yet another embodiment of a LENR power generator with the glow discharge cell of FIG. 22;

FIGS. 24 and 25 schematically illustrate water cooling systems of the LENR power generator of FIG. 23;

FIG. 26 schematically illustrates a gas flow system of the LENR power generator of FIG. 23;

FIGS. 27-32 are graphs illustrating the effect of electrical pulsed energy on various characteristics of the glow discharge cell of FIG. 22;

FIG. 33 schematically illustrates a sectional perspective view of an embodiment of a catalyst cell system in accordance with the invention;

FIG. 34 schematically illustrates a sectional perspective view of another embodiment of a catalyst cell system in accordance with the invention;

FIG. 35 schematically illustrates yet another embodiment of a LENR power generator with the catalyst cell system of FIG. 34;

FIG. 36 schematically illustrates a sectional perspective view of an embodiment of a high pressure electrolytic ultrasonic cell LENR power generator in accordance with the invention;

FIG. 37 schematically illustrates a top perspective view of the high pressure electrolytic ultrasonic cell LENR power generator of FIG. 36, taken from line 37-37 of FIG. 36;

FIG. 38 schematically illustrates a bottom perspective view of the high pressure electrolytic ultrasonic cell LENR power generator of FIGS. 36 and 37, taken from line 38-38 of FIG. 36;

FIG. 39 schematically illustrates an enlarged sectional perspective view of a portion of the high pressure electrolytic ultrasonic cell LENR power generator of FIGS. 36-38;

FIG. 40 schematically illustrates an enlarged sectional perspective view of a portion of the high pressure electrolytic ultrasonic cell LENR power generator of FIGS. 36-39;

FIG. 41 schematically illustrates a sectional perspective view of an embodiment of a constant temperature container containing the high pressure electrolytic ultrasonic cell LENR power generator of FIGS. 36-40; and

FIG. 42 schematically illustrates a top perspective view of the constant temperature container of FIG. 26, taken from line 27-27 of FIG. 26, containing the high pressure electrolytic ultrasonic cell LENR power generator of FIGS. 21-26.

### Detailed Description of the Intention

### Superwaving:

The present invention represents a significant advance beyond the discovery at the Los Alamos National Laboratory that a greater production of excess heat is obtained in an electrochemical cell by pulsing the current flowing through the cell. In the present invention, applied to the electrodes of the cell are voltage or current (electrical) pulses to produce a pulsed ion-flow in the cell. However, these pulses are not of constant amplitude and duration but are in a pattern in which the amplitude and duration of the pulses and the intervals therebetween are modulated to give rise to a dense packing, for example, of deuterium atoms in the palladium electrode that promotes LENR.

This pulse pattern is in accordance with superwaving activity as set forth in the theory advanced in the Irving I. Dardik article "The Great Law of the Universe" that appeared in the March/April 1994 issue of the "Cycles" Journal. This article is incorporated herein by reference.

As pointed out in the Dardik article, it is generally accepted in science that all things in nature are composed of atoms that move around in perpetual motion, the atoms attracting each other when they are a little distance apart and repelling upon being squeezed into one another. In contradistinction, the Dardik hypothesis is that all things in the universe are composed of waves that wave, this activity being referred to as "superwaving." Superwaving gives rise to and is matter in motion (i.e., both change simultaneously to define matter-space-time).

Thus in nature, changes in the frequency and amplitude of a wave are not independent and different from one another, but are concurrently one and the same, representing two different hierarchical levels simultaneously. Any increase in wave frequency at the same time creates a new wave pattern, for all waves incorporate therein smaller waves and varying frequencies, and one cannot exist without the other.

Every wave necessarily incorporates smaller waves, and is contained by larger waves. Thus each high-amplitude low-frequency major wave is modulated by many higher frequency low-amplitude minor waves. Superwaving is an ongoing process of waves waving within one another.

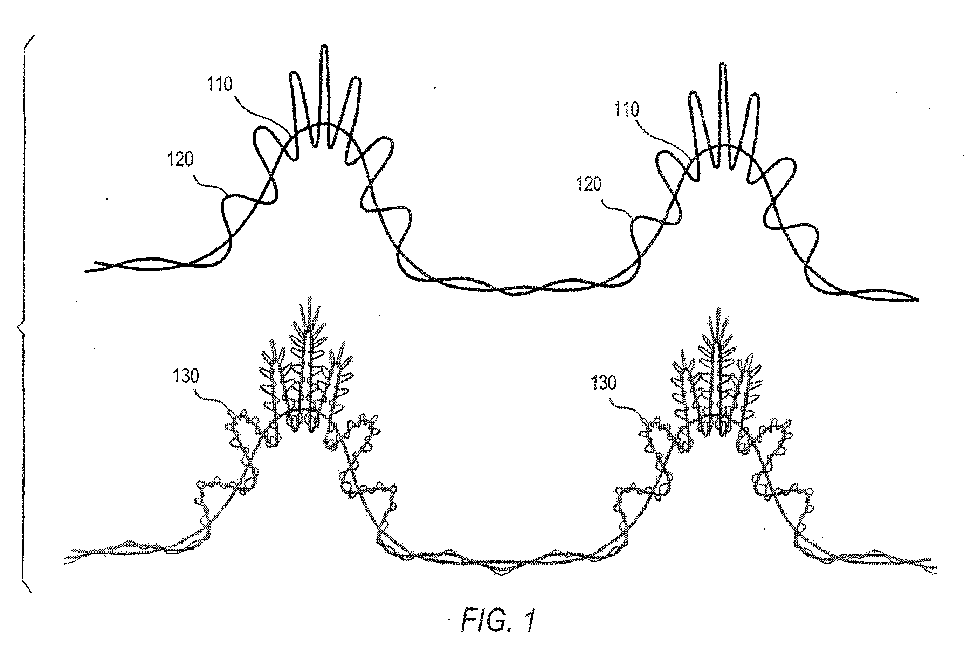

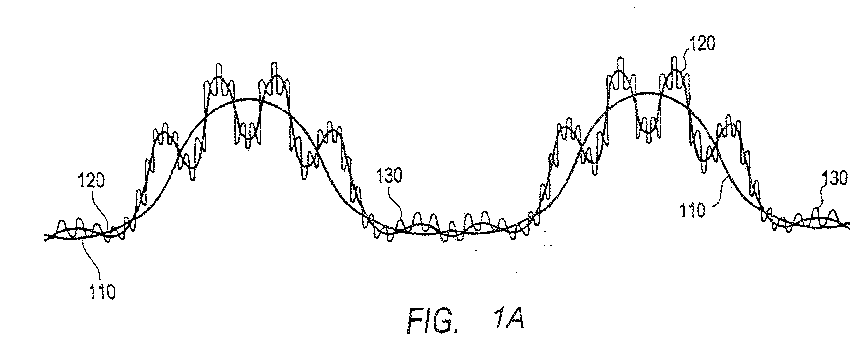

FIG. 1 (adapted from the illustrations in the Dardik article) schematically illustrates superwaving wave phenomena. FIG. 1 depicts low-frequency major wave 110 modulated, for example, by minor waves 120 and 130. Minor waves 120 and 130 have progressively higher frequencies (compared to major wave 110). Other minor waves of even higher frequency may modulate major wave 110, but are not shown for clarity. This same superwaving wave phenomena is depicted in the time-domain in FIG. 1A.

This new principle of waves waving demonstrates that wave frequency and wave intensity (amplitude squared) are simultaneous and continuous. The two different kinds of energy (i.e., energy carried by the waves that is proportional to their frequency, and energy proportional to their intensity) are also simultaneous and continuous. Energy therefore is waves waving, or "wave/energy." In a low energy nuclear reaction power generator in accordance with the present invention, the pattern of pulses applied to the electrodes of the cell is derived from superwaving wave activity.

### The Electrolytic Cell:

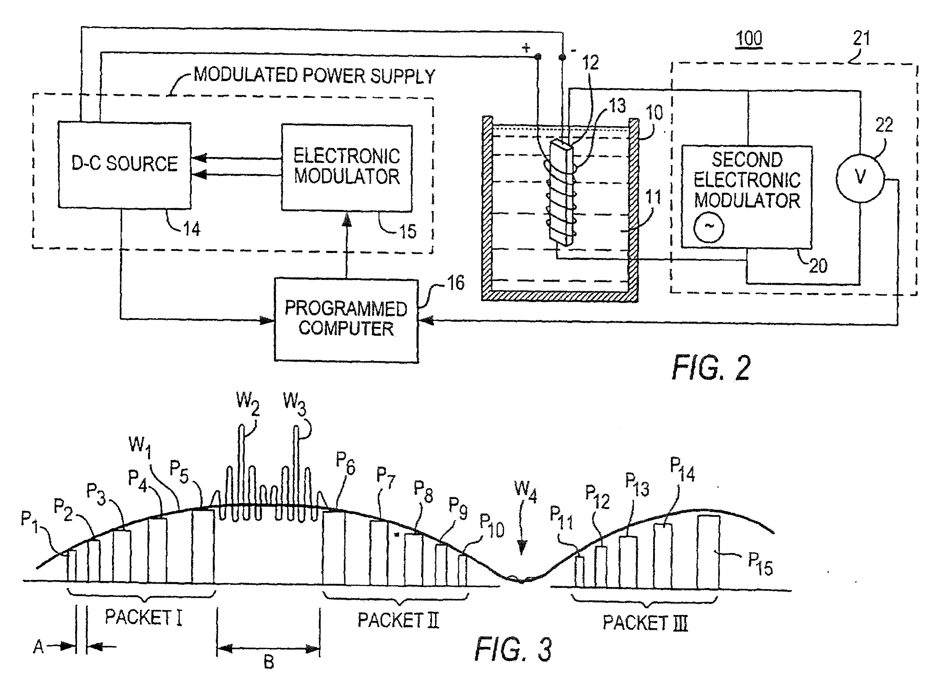

Referring now to FIG. 2, there is shown one preferable embodiment of a low energy nuclear reaction power generator 100 in accordance with the present invention provided with an electrolytic cell. The cell is provided with a vessel 10. Vessel 10 contains electrolyte 11. Electrolyte 11 may be any suitable liquid electrolyte, such as heavy water or light water mixed with suitable solutes (e.g., LiOD, D₂SO₄, Li₂SO₄, etc.), for example. For purposes of illustration, electrolyte 11 may be heavy water which is rendered electrically conductive by a suitable solute dissolved therein (e.g., LiOD).

Immersed in the electrolyte is an anode-cathode electrode pair formed by a cathode 12 and an anode 13. Cathode 12 and anode 13 may be made of any suitable metal (e.g., palladium, platinum, titanium, nickel, etc.) or any suitable non-metallic substrate plated by suitable metallic film (e.g., palladium or titanium on sapphire, etc.). For purposes of illustration, cathode 12 may be a strip or wire made of palladium and anode 13 may be a coil or plate of platinum. Anode coil 13 surrounds or may be mounted parallel to the strip of palladium metal so that the electrodes are bridged by the conductive electrolyte 11 and so that a voltage impressed across the electrodes causes a current to flow therebetween.

Connected across the electrodes of the electrochemical cell is a d-c power supply, resulting in a steady current flowing through the electrolyte, causing it to dissociate, so that oxygen gas is liberated at the platinum anode electrode, while hydrogenous ions migrate towards the palladium cathode electrode and partially accumulate thereon; the other part is liberated at the cathode as hydrogen gas.

In a generator in accordance with the invention, a d-c voltage or current source 14 is provided whose output is applied across the electrodes 12 and 13 of the cell through an electronic modulator 15. The operation of modulator 15 is controlled by a programmed computer 16, whereby the modulator yields voltage or current pulses whose amplitude and duration, as well as the duration of the intervals between pulses, are determined by the program. The maximum amplitude of the pulses corresponds to the full output of the d-c source 14. Thus, if the source provides a 45 VDC output, the maximum amplitude of the pulses will be 45 VDC, and the amplitudes of pulses having a lesser amplitude will be below 45 VDC, depending on the program.

Computer 16 is programmed to activate electronic modulator 15 so as to yield a train of pulse packets, each packet being formed by a cluster of pulses that assume the pattern shown in FIG. 3. Thus, for example, the first packet in the train, packet I, is composed of five pulses P₁ to P₅ which progressively vary in amplitude, pulse P₁ being of the lowest amplitude and pulse P₅ being of the highest amplitude. The respective durations of pulses P₁ to P₅ vary progressively so that pulse P₁ is of the shortest duration and pulse P₅ is of the longest duration, and so that the intervals A between successive pulses in the cluster forming the packet vary progressively in duration. Thus, the first interval between pulses P₁ and P₂ is shortest in duration, and the last interval between pulses P₄ and P₅ is longest in duration. While the packets are shown as being composed of five pulses, in practice they may have a fewer or a greater number of pulses. The duration of a packet may, for example, be about 30 seconds, and the intervals between successive packets may, for example, be in a range of 2-5 seconds.

The second packet in the train, packet II, is also composed of five pulses P₆ to P₁₀, but their amplitudes and durations, and the intervals between pulses, are the reverse of those in the pulse cluster of packet I. Hence, pulse P₆ is of the greatest amplitude and that of P₁₀ is of the lowest amplitude.

The third packet in the train, packet III, is formed of a cluster of five pulses P₁₁ to P₁₅ whose amplitudes and durations, and the intervals between pulses, correspond to those in packet I. The intervals between successive packets in the train have a duration B that changes from packet to packet,

The varying amplitudes of the pulses in the successive packets conform to the amplitude envelope of a major wave W₁. The varying durations of the pulses in the packets conform to the amplitude envelope of a minor wave W₂ whose frequency differs from that of major wave W₁. The varying durations of the intervals between the pulses in a packet conforms to the amplitude envelope of still another minor wave W₃ of different frequency. And the varying durations of the intervals between successive packets in the train are in accordance with the amplitude envelope of yet another minor wave W₄ of different frequency.

It will be understood that in FIG. 3, for purposes of clarity, only small portions of minor waves W₂, W₃, and W₄ superimposed on wave W₁ are shown. Furthermore, for clarity, the amplitudes and frequencies of superwaving minor waves W₂, W₃, and W₄, relative to each other and relative to major wave W₁, are not drawn to scale. In fact the maximum amplitude of the minor waves may be proportional to the instantaneous amplitude of the major wave. Thus, minor waves W₂ and W₃ (which are located at about the peak amplitude of major wave W₁) are likely to have much larger maximum amplitudes than the maximum amplitude of minor wave W₄ (which is located at about the bottom of a valley of wave W₁). The maximum amplitude of minor waves W₂ and W₃ at the peak of the major wave may even be comparable to the peak amplitude of major wave W₁, (i.e., the minor waves may have the same or greater intensity as the major waves as shown in FIG. 1).
Other illustrative examples of superwaving minor waves within major waves and their frequency and amplitude distribution are provided by the FIGS. shown in the Dardik article "The Great Law of the Universe" incorporated herein by reference.

With continued reference to FIG. 3, the pattern of the voltage or current (electrical) pulses which constitute the train is governed by superwaving waves W₁ to W₄ and the ions which flow between the electrodes immersed in the electrolyte are pulsed accordingly.

Thus, instead of a steady stream of deuterium ions migrating toward the palladium electrode, the deuterium ions travel in clusters, each created by a packet of pulses, to produce a high intensity surge of deuterium ions that bombards the palladium electrode. The surges of deuterium ions which repeatedly bombard the palladium electrode give rise to a dense packing of the deuterium atoms in the palladium which creates LENR heat.

In a generator in accordance with the invention, a resistance meter (LCR) 21, which may include a second modulator 20 and a voltmeter 22, may be implemented in order to measure the resistance of cathode 12. This measurement may then be used to indicate the level of deuterium atom-packing of the cathode.

Highly effective computer pulse pattern programs afford optimum results, resulting in the greatest amount of nuclear reaction heat at the palladium electrode. These can be determined empirically by modifying the program of computer 16 to find the most effective pattern and by modifying the program to be responsive to the resistance of the cathode measured by LCR 21. In one example of a method according to the present invention, the change in resistance may be used to modify the modulating in order to maximize the atom-packing. A feedback signal representing the slope of the resistance, for example, may be used to optimize the relationship between any of the waves with respect to any of the other waves, the respective frequencies of the individual waves, the respective amplitudes of the individual waves, or any other suitable parameter.

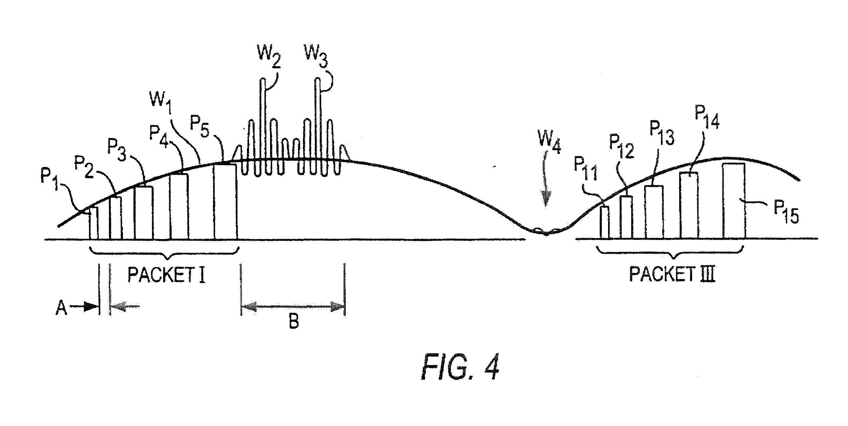

One example of the most effective pulse pattern is to incorporate a relaxation period corresponding to the downward phases of the major wave W₁. Pulse packets in the pulse train may be completely turned off during the relaxation periods corresponding to the downward phases. FIG. 4 illustrates a pulse pattern with pulses (e.g., pulses of packet II, FIG. 3) completely switched off during the relaxation period.

The program is developed from a formation of superwaving waves which are digitized so as to derive a pulse at the peak of each wave cycle. The aforementioned Dardik article illustrates various forms of superwaving waves.

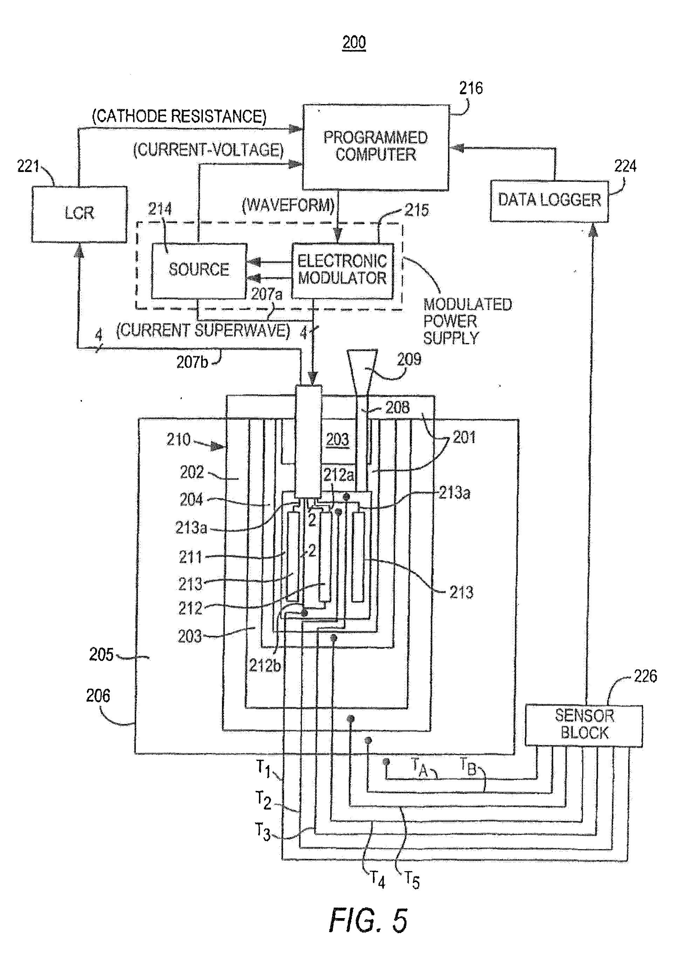

Referring now to FIG. 5, there is shown a sectional view of another preferable embodiment of a low energy nuclear reaction power generator 200 in accordance with the invention. This generator is provided with an electrolytic cell having a double cylinder calorimetric assembly 210 in order to measure the temperature of the cell and the heat released as compared to the electrical power consumed during electrolysis. Calorimetric assembly 210 may include an external cylinder 202, an internal cylinder 204, and thermal insulation 203 therebetween. Each of cylinders 202 and 204 may be made of any suitable material having high heat conductivity (e.g., aluminum, copper, etc.), and thermal insulation 203 may also be made of any suitable material such as alumina powder or zirconia magnesia, for example. For purposes of illustration, cylinders 202 and 204 may be aluminum, and insulation 203 may be alumina powder.

Internal cylinder 204 is lined with, and assembly 210 is covered by, an inert material 201, such as Teflon™. Cylinder 204 also contains electrolyte 211. Like electrolyte 11, electrolyte 211 may be any suitable liquid electrolyte, such as heavy water or light water mixed with suitable solutes, for example. For purposes of illustration, electrolyte 211 may be heavy water which is rendered electrically conductive by a suitable material dissolved therein. Electrolyte 211 is preferably prepared, for example, by mixing 225 milliliters of low tritium content D₂O with 5.24 milliliters of a 9% lithium deuteroxide solution.

Immersed in the electrolyte is an anode-cathode electrode pair formed by a cathode 212 and an anode 213. Cathode 212 and anode 213 may be strips, film, mesh, or foil made of any suitable metal (e.g., palladium, platinum, titanium, nickel, etc.), or non-metallic substrate plated by suitable metallic films. For purposes of illustration, cathode 212 may be a foil of palladium having a length of within the range of 60-100 millimeters, a width within the range of 4-10 millimeters, and a thickness within the range of 50-100 microns, for example. Anode 213 may, for example, include two foils of platinum, each anode foil having dimensions with a length within the range of 80-230 millimeters, a width within the range of 15-20 millimeters, and a thickness within the range of 50-200 microns. Each anode 213 may, for example, also include a 0.17 millimeter thick suitable piece of polymer sheet fixed on one of its sides facing cathode 212 to eliminate possible migration of bubbles and to allow passage of ions. Each of the foils of anode 213 may, for example, be located 5 millimeters from its respective side of cathode 212 so that the electrodes are bridged by conductive electrolyte 211 and so that a voltage impressed across the electrodes causes a current to flow therebetween.

So that such a voltage may be impressed across the electrodes, cathode 212 may include at least one contact wire 212a extending from its upper end and 2-wires 212b extending from each of its ends to be connected to a resistance meter (LCR) 221, and each one of the foils of anode 213 may include at least one contact wire 213a extending from one of its ends. Contact wires 212a and 213a may be wires made of any suitable metal (e.g., platinum, gold, etc.). For purposes of illustration, each one of wires 212a and 213a may be a platinum contact wire having a diameter within the range of 0.3-0.5 millimeters. Preferably, each wire is connected to the end of its respective electrode using spot welding or mechanical pressing, and may be protected with Teflon™ heat shrink tubes or sleeves, for example. Each of contact wires 212a/213a and 212b is also preferably soldered to Teflon™ insulated copper hook-up wires 207a and 207b, respectively, and each soldered area is preferably protected with a Teflon™ connection tube (not shown) filled with SpeciFix220™ epoxy compound that is allowed to harden for 24 hours at room temperature, for example. Preferably, insulated hook-up wires 207a and their epoxy-filled connection tubes allow contact wires 212a and 213a to be coupled to voltage sources external to the assembled electrolytic cell.

Before the electrolytic cell of FIG. 5 is assembled, each of the foils of cathode 212 and anode 213 is preferably degreased, for example, by soaking the foils in a 2% Microclean™ solution for 1 hour, rinsing them with running tap water for at least 15 minutes, rinsing them twice with deionized water, rinsing them with a 95% Ethanol solution, rinsing them with Ethanol Absolute, and then drying them well. Furthermore, it is preferable that degreased cathode 212 be annealed, for example, by placing the cathode on a sapphire plate, inserting the plate into a quartz tube, connecting the tube to a vacuum pump, attaining a vacuum level of about 10⁻⁵ Torr., placing the tube into a furnace, maintaining the furnace at a temperature of about 800-900° Celsius for 20-60 minutes, switching off the furnace, maintaining a vacuum pump for at least 24 hours, and then etched and kept under vacuum at ambient temperature. The cathode-anode electrode pair is then assembled onto a holder. It is also preferable that each one of the pieces of Teflon™ and polymers are pre-treated before assembling the electrolytic cell, for example, by etching the piece under an exhaust hood in a mixture that is 5 parts H₂O₂ and 1 part H₂SO₄ by volume until the end of gas generation, pouring out the mixture, soaking the piece in tap water for between 1 and 2 hours, rinsing it with running tap water for at least 30 minutes, rinsing it with deionized water three times, rinsing it with a 95% Ethanol solution, rinsing it with Ethanol Absolute, and then drying it well.

The electrolytic cell is immersed in a liquid bath 205 contained by a housing 206. Bath 205 may be any suitable liquid (e.g., water, oil, etc.), and may be any suitable temperature, for example, in a range of about 0-20° Celsius. For purposes of illustration, bath 205 may be a substantially constant temperature water bath. An exit gas line 208 may extend from the head-space of the electrolytic cell to an end outside the enclosure of housing 206, and a recombiner 209 may be attached to the end of line 208 in order to recombine into liquid any free oxygen and deuterium gases formed from electrolyte 211 during electrolysis.

outside the enclosure of housing 206, a battery or d-c power supply is connected across cathode 212 and anode 213 by wires 212a, 213a, 207a, and 207b, resulting in a current flowing through electrolyte 211, causing it to dissociate, so that oxygen gas is liberated at anode 213 while hydrogenous ions migrate toward cathode 212 and partially accumulate thereon while the other part is liberated at the cathode as hydrogen gas and accumulate thereon.

In the generator shown in FIG. 5 in accordance with the present invention, a d-c voltage or current source 214, which may be similar to source 14 of FIG. 2, is provided whose output is applied across electrodes 212 and 213 of the cell via wires 207a, 212a, and 213a, through an electronic modulator 215, which may be similar to modulator 15 of FIG. 2.
Source 214 and modulator 215 may be combined into a modulated power supply. The operation of modulator 215 is controlled by a programmed computer 216, which may be similar to computer 16 of FIG. 2, whereby the modulator yields voltage or current pulses whose amplitude and duration, as well as the duration of the intervals between pulses, are determined by the program.

A second high frequency current modulator and a voltmeter may be implemented as LCR 221 in order to measure the resistance of cathode 212, similarly to modulator 20 and voltmeter 22 of FIG. 2, as described above.

Preferably, a data logger 224 is included in the system in accordance with the present invention to acquire various types of data about the process of cell 200 and to provide this data to computer 216. Temperature sensor block 226, which may include a plurality of temperature sensors T₁, T₂, T₃, T₄, T₅, T_{A}, and T_{B} are preferably included in the system to provide data logger 224 with the temperature of various elements of the apparatus, cell 200.

As described above, highly effective computer pulse pattern programs afford optimum results, resulting in the greatest amount of heat at the palladium electrode. These can be determined empirically by modifying the program of computer 216 to find the most effective pattern and by modifying the program to be responsive to the resistance of the cathode. In one example of a method according to the invention, the change in resistance may be used to modify the modulating in order to maximize the atom-packing. A feedback signal representing the slope of the resistance may be used to optimize the relationship between any of the waves with respect to any of the other waves, the respective frequencies of the individual waves, the respective amplitudes of the individual waves, or any other suitable parameters.

### Electrolytic Cell LENR Power Generator Experiments:

The following examples, including the experiments conducted and results achieved, are provided for illustrative purposes only and are not to be construed as limiting upon the present invention.

In accordance with the present invention, the electrolytic cell shown in FIG. 5 was used for a parametric study of the effect of different control parameters on the response of the cell. In a first experimental setup, the temperature of the cell was measured at seven different locations (indicated in FIG. 5 by temperature sensors T₁₋₃ within the electrolyte, while maintaining the driving power (or average current) constant but varying the period of the sinusoidal wave.

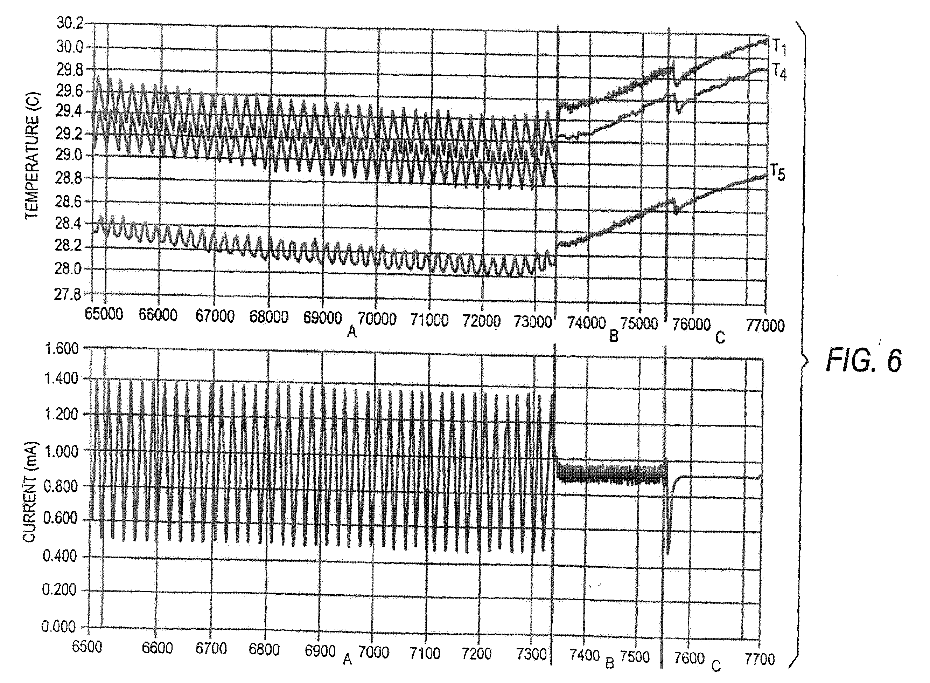

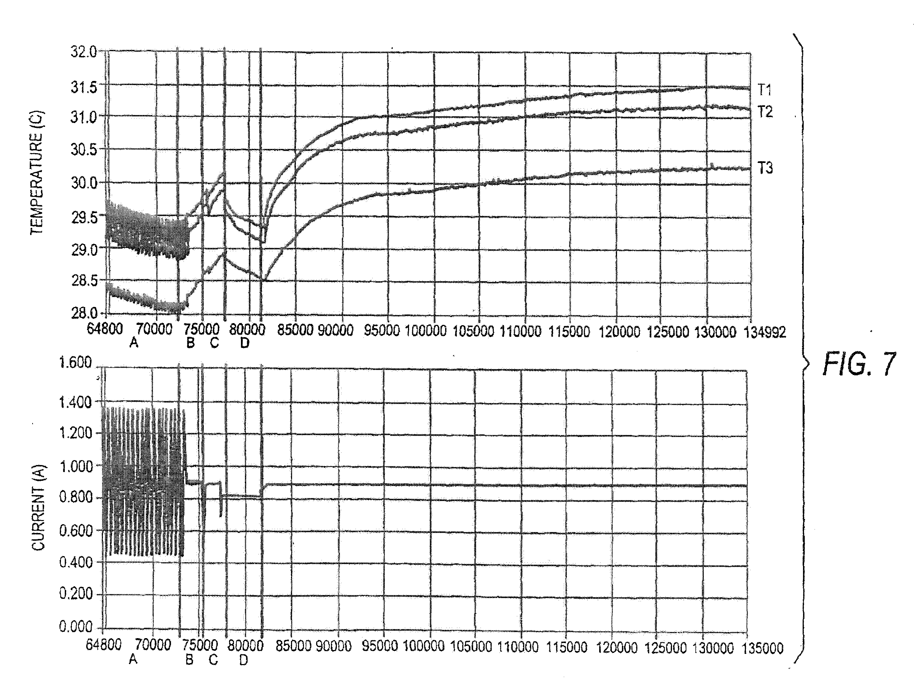

With reference to FIGS. 6 and 7, it is shown that, when the driving current was switched from a sinusoidal wave with a period of 200 seconds (region A of FIGS. 6 and 7) to a sinusoidal wave with a period of 20 seconds (region B of FIGS. 6 and 7), the cell temperature indicated by sensors T₁, T₂, and T₃ increased as a result of the change. Next, when' the driving current was switched from the sinusoidal wave with a period of 20 seconds to a sinusoidal wave with a period of 5 seconds (region C of FIGS. 6 and 7), the cell temperature indicated by sensors T₁, T₂, and T₃ as a result increased at a comparable rate to when the period of the wave was switched from 200 seconds to 20 seconds.

As shown, the temperature of the cell in region E equilibrated at approximately 2° Celsius above the temperature at the end of region A when a wave with a 200 second period was used. This temperature increase indicates excess heat generated by the electrolytic cell. Unfortunately, it was not possible to take a direct measurement of this excess heat during this first experiment.

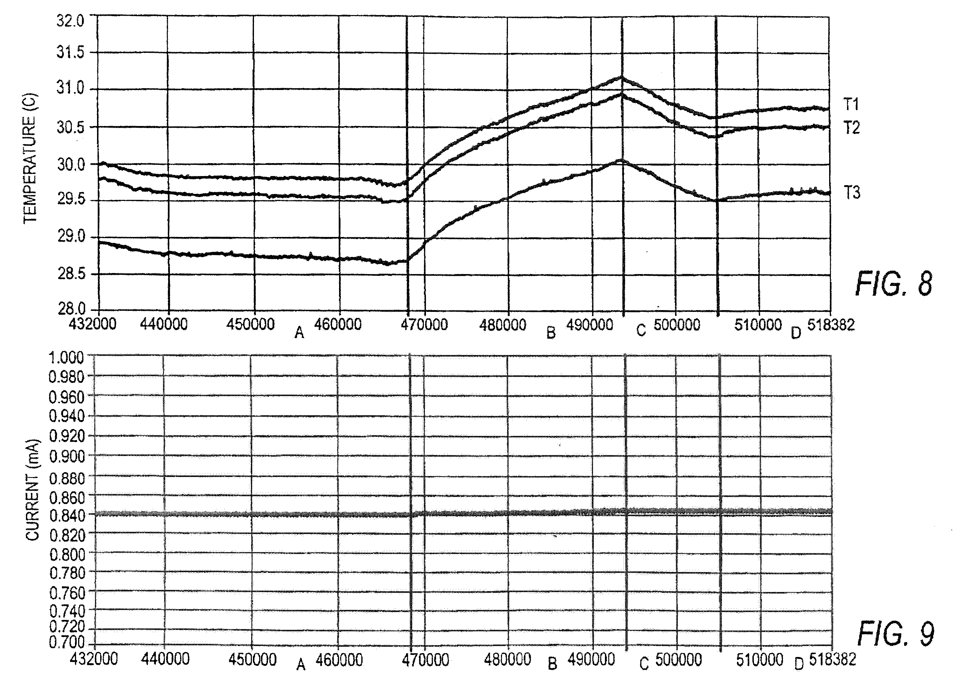

In another experiment, the triggering of a higher excess heat generation rate was demonstrated. The cell of FIG. 5 was immersed in water bath 205 and was driven by a 5 second sinusoidal wave of a constant current. Firstly, with reference to FIG. 8, the cell temperature indicated by sensors T₁, T₂, and T₃ increased from region A to region B when the air conditioning in the experimentation room was turned off. In region C, the air conditioning was turned on, again causing the cell temperatures to go down and equilibrate at a temperature about 1° Celsius higher (region D) than the temperatures of the cell before the air conditioning was initially shut down (i.e., the end of region A). The input current was not changed, as may be seen by the graph of FIG. 9. Thus, it is demonstrated that the increase in the temperatures of the cell triggered an increase in excess heat generation rate and persisted even when the ambient temperature dropped to its original value.

In yet another experiment, the triggering of a significantly higher excess heat generation rate was demonstrated. The structure of cell 200 of FIG. 5 was immersed in 2.5° Celsius water bath 205. The temperature of the cell was measured by temperature sensors at seven different locations as indicated in FIG. 5: T₁₋₃ within the electrolyte, T₄ inside the wall of cylinder 204, T₅ inside the wall of cylinder 202, T_{B} inside bath 205, and T_{A} in the environment surrounding the apparatus. Cathode 212 was a foil of palladium, prepared by Dr. Vittorio Violante (ENEA, Frascatti, Italy), having a length of 80 millimeters, a width of 7 millimeters, and a thickness of 50 microns.
Anode 213 included two foils of platinum, each anode foil having a length of 80 millimeters, a width of 20 millimeters, and a thickness of between 5 microns and 200 millimeters. Each foil of platinum also included a 0.17 millimeter thick suitable piece of polymer sheet fixed on one of its sides facing cathode 212 to eliminate possible migration of bubbles and to allow passage of ions. Each of the foils of anode 213 was located approximately 5 millimeters from its respective side of cathode 212 so that the electrodes were bridged by conductive electrolyte 211 and so that a voltage impressed across the electrodes caused a current to flow therebetween. Electrolyte 211 was prepared by mixing 230 milliliters of low tritium content D₂O with LiOD to form a 0.1 molar solution.

In this experiment, before the electrolytic cell was assembled, the foil of cathode 212 was annealed by placing the cathode on a sapphire plate, inserting the plate into a quarts tube, connecting the tube to a vacuum pump, placing the tube into a furnace, attaining a vacuum level of about 10⁻⁵ Torr, maintaining the furnace at a temperature of about 870° Celsius for 1 hour, switching off the furnace, and maintaining a vacuum pump for at least 24 hours. The annealed foil was then etched by immersing the foil in a 66% nitric acid solution for 1 minute, immersing the foil in an aqua regia 1:1 water solution for 1 minute, rinsing it four times with D₂O, rinsing it twice with a 95% Ethanol solution, rinsing it once with Ethanol Absolute, and then drying it in a vacuum at ambient temperature for 24 hours.

Each one of the pieces of Teflon™ and polymers were pre-treated before assembling the electrolytic cell by etching the piece under an exhaust hood in a mixture that is 5 parts H₂O₂ and 1 part H₂SO₄ by volume until the end of gas generation, pouring out the mixture, soaking the piece in tap water for between 1 and 2 hours, 1 rinsing it with running tap water for at least 30 minutes, rinsing it with deionized water three times, rinsing it with a 95% Ethanol solution, rinsing it with Ethanol Absolute, and then drying it well.

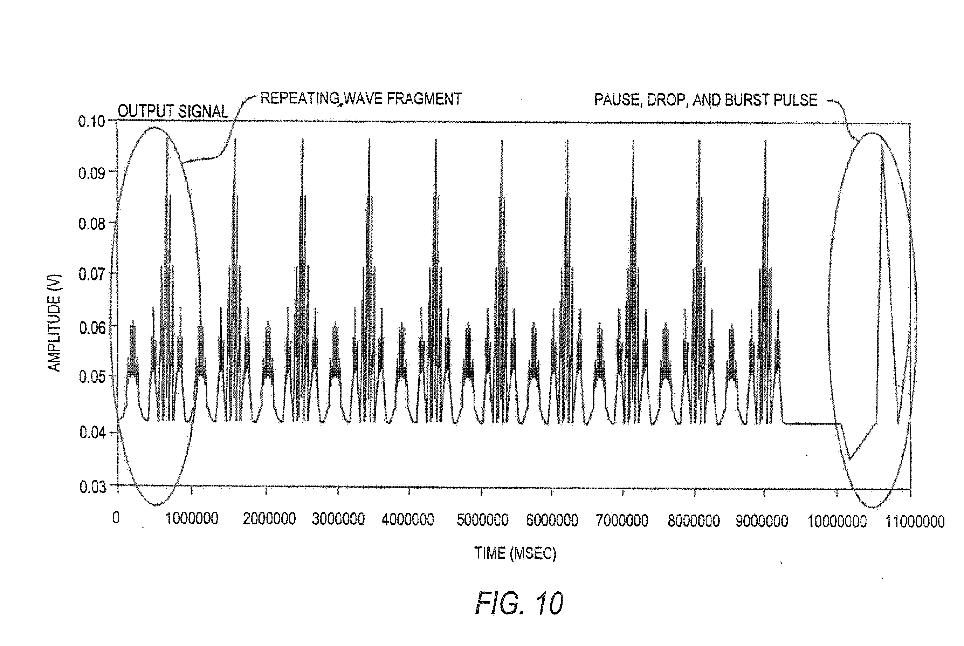

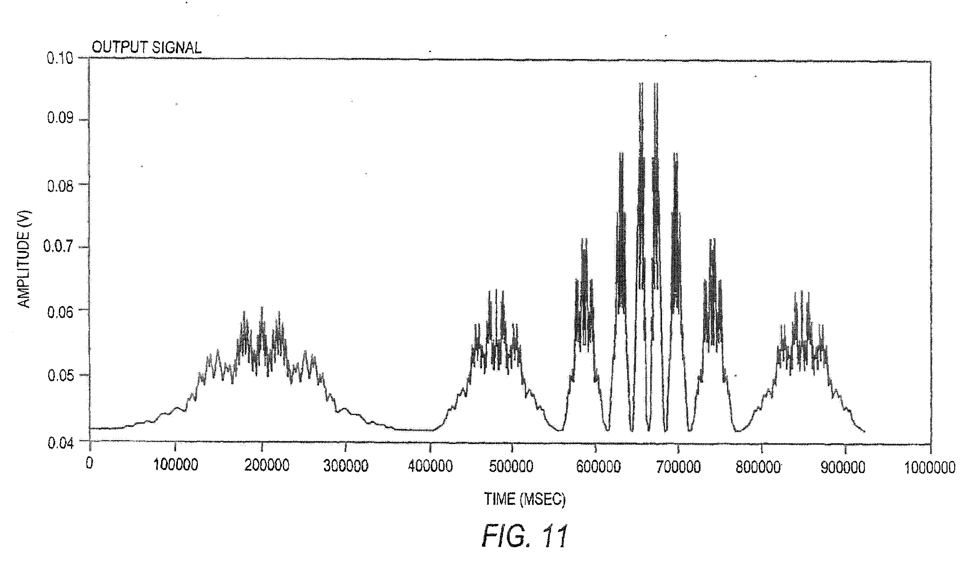

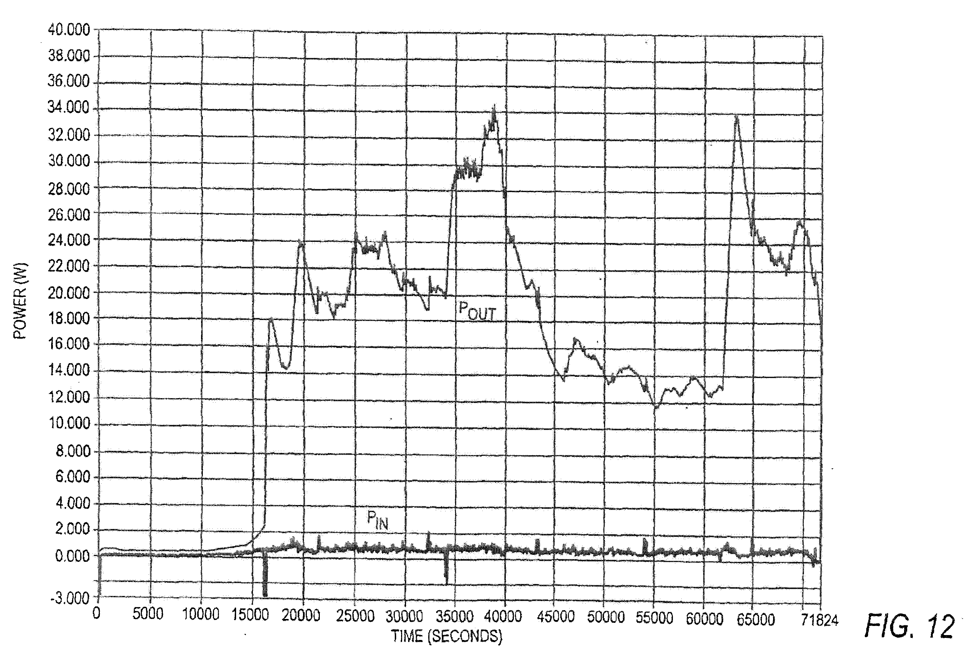

In this experiment using the generator of FIG. 5 prepared as described above, the cell was driven by a repeating 11,000 second (i.e., 3 hour) superwave with an average current of 58.59 milliamperes (i.e., I_{IN}). The repeating wave fragment (i.e., V_{IN}) of this superwave is shown in FIGS. 10 and 11 and includes four levels of modulation with ten repeating packets followed by a (pause, drop, and burst) pulse. FIG. 12 shows the evolution of the input power P_{IN} supplied to the cell and the output power P_{OUT} provided by the cell throughout the course of this experiment. As shown, although P_{IN} (i.e., I_{IN} * V_{IN}) remained substantially constant between 0.3 and 0.9 Watts, P_{OUT} dramatically increased after about 16,000 seconds (i.e., 4.5 hours) to a peak of over 34 Watts.

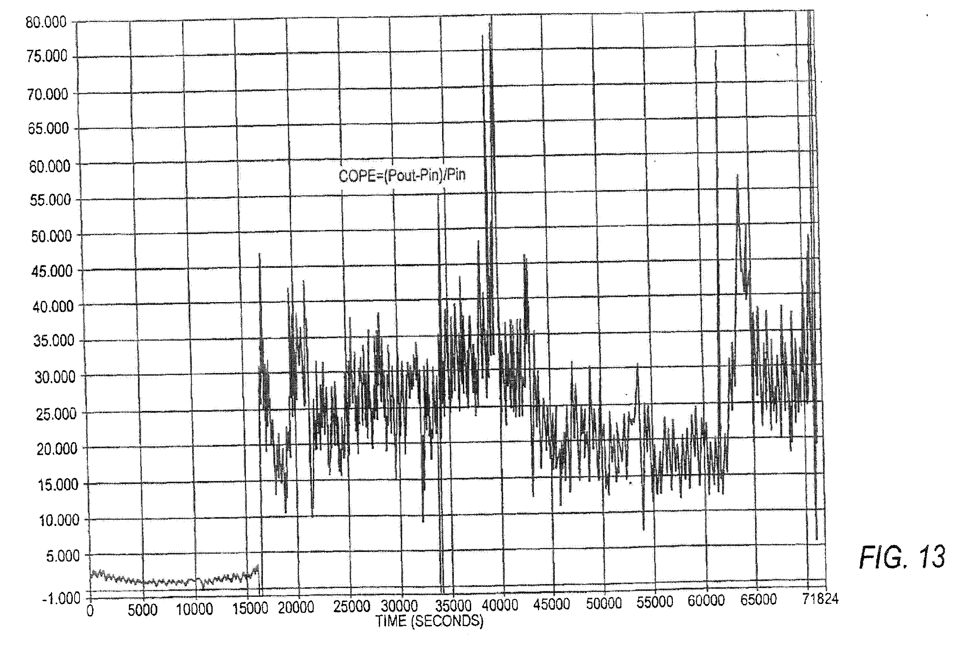

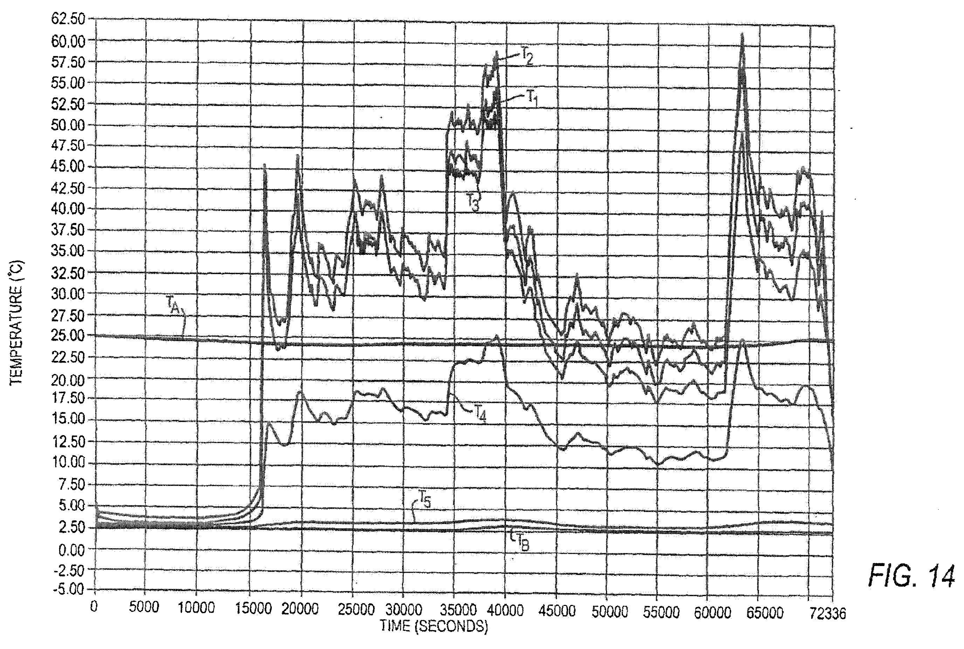

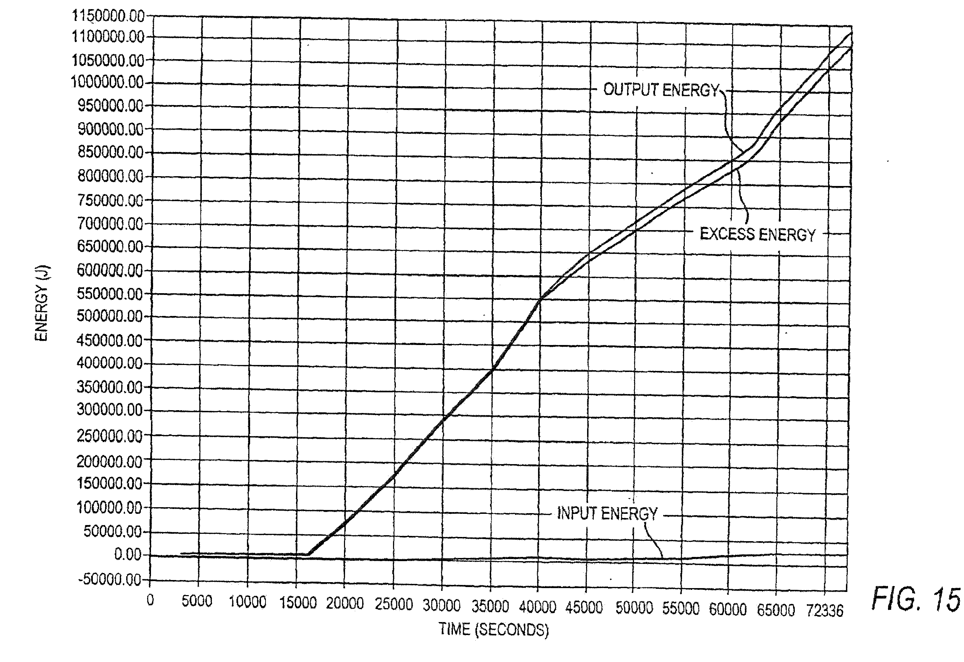

FIG. 13 shows the evolution of the coefficient of power efficiency (COPE) of the cell (i.e., (P_{OUT} - P_{IN})/P_{IN}). After the initial 4.5 hours, the average COPE was measured to be about 25 for the final 16 hours of the experiment. FIG. 14 shows that the cell temperature indicated by sensors T₁₋₃, and even the temperature of the wall of cylinder 204 indicated by sensor T₄, increased significantly about 16,000 seconds into the experiment, while the bath temperature, indicated by sensor T_{B}, remained substantially constant. Finally, FIG. 15 shows the evolution, throughout the course of this experiment, of the accumulated input energy E_{IN} invested into the cell during this experiment, the output energy E_{OUT} removed from the cell during this experiment, and the excess energy E_{X} generated.

As shown in FIG. 15, by the end of this experiment, roughly 20 hours (i.e., 72,336 seconds) after it began, the cell had generated over 1,100.00 kilo-Joules of excess energy, of which there is no known precedent. This amount of excess heat could not be generated by any chemical reaction; it could only be generated by LENR.

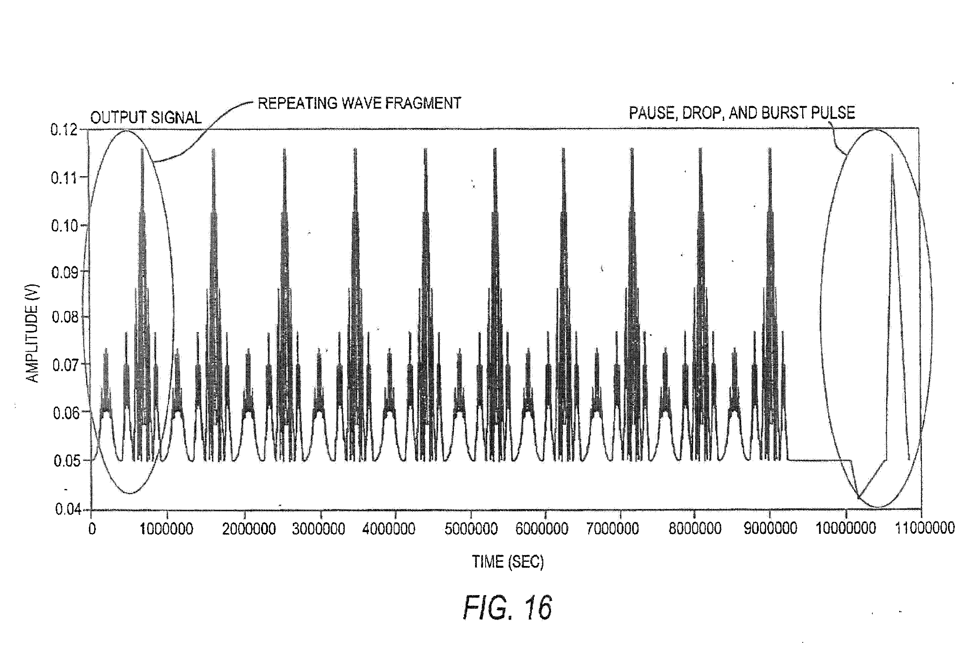

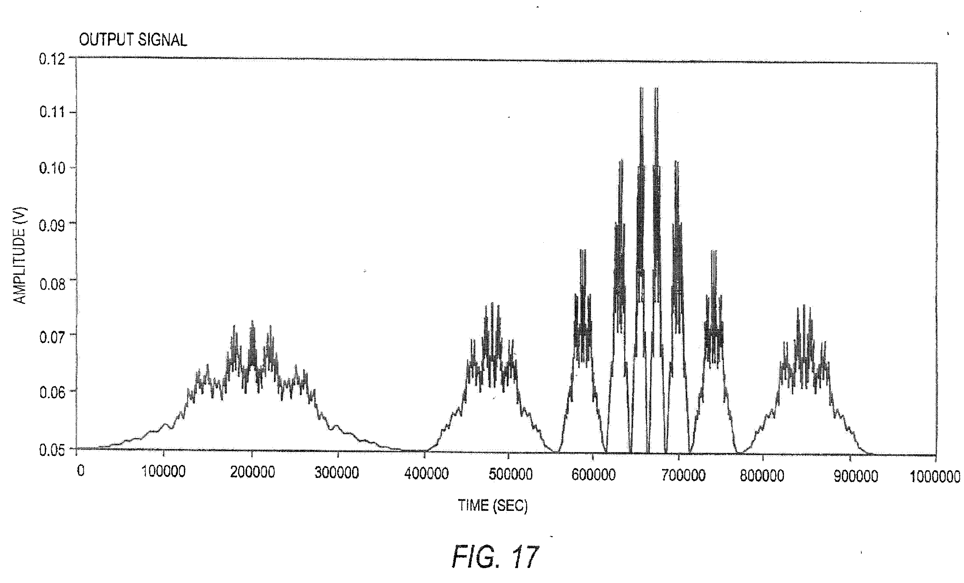

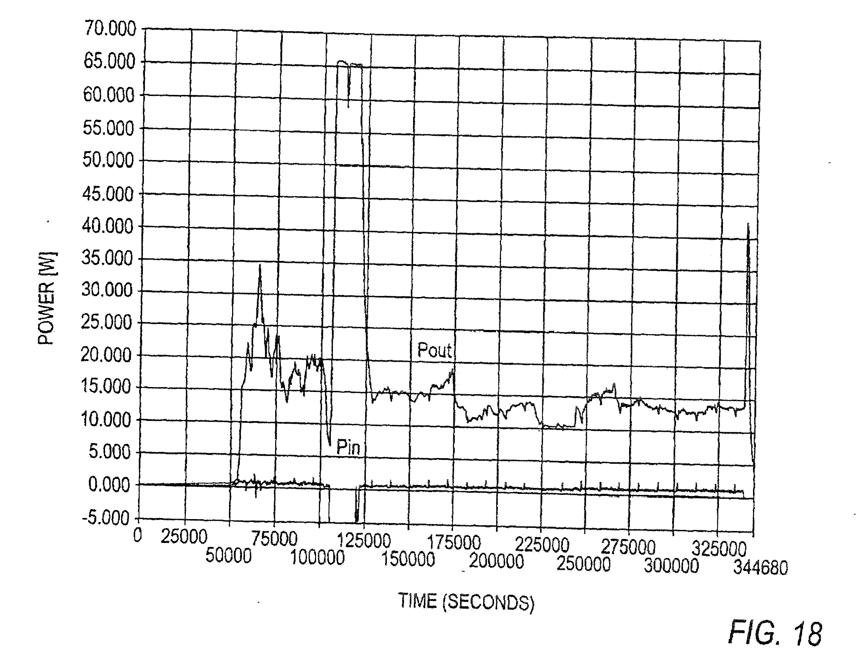

This experiment continued by deloading the cell after roughly 20 hours of being provided with the superwave of FIG. 10 and after the strong excess of heat generation, as shown in FIGS. 12-15. After being deloaded, the cell was again driven by a repeating 11,000 second (i.e., 3 hour) superwave, but this time with an average current of 70.31 milliamperes (i.e., I_{IN}). The repeating wave fragment (i.e., V_{IN}) of this superwave is shown in FIGS. 16 and 17 and includes four levels of modulation with ten repeating packets followed by a (pause, drop, and burst) pulse. FIG. 18 shows the evolution of the input power P_{IN} supplied to the cell and the output power P_{OUT} provided by the cell throughout the course of this experiment. As shown, although P_{IN} (i.e., I_{IN} * V_{IN}) remained substantially constant between 0.30 and 1.05 Watts, P_{OUT} dramatically increased about 57,600 seconds (i.e., 16 hours) after completion of the deloading process to a peak of over 34 Watts.

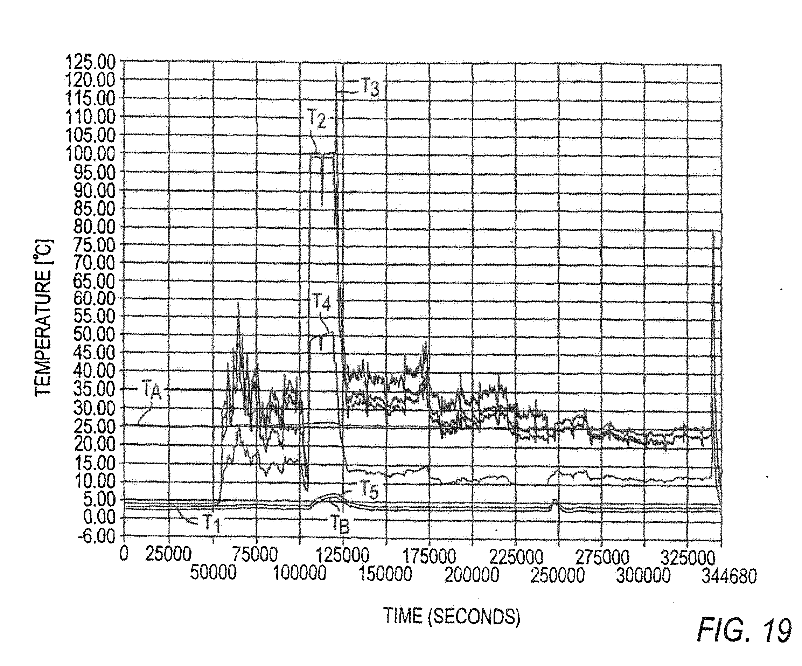

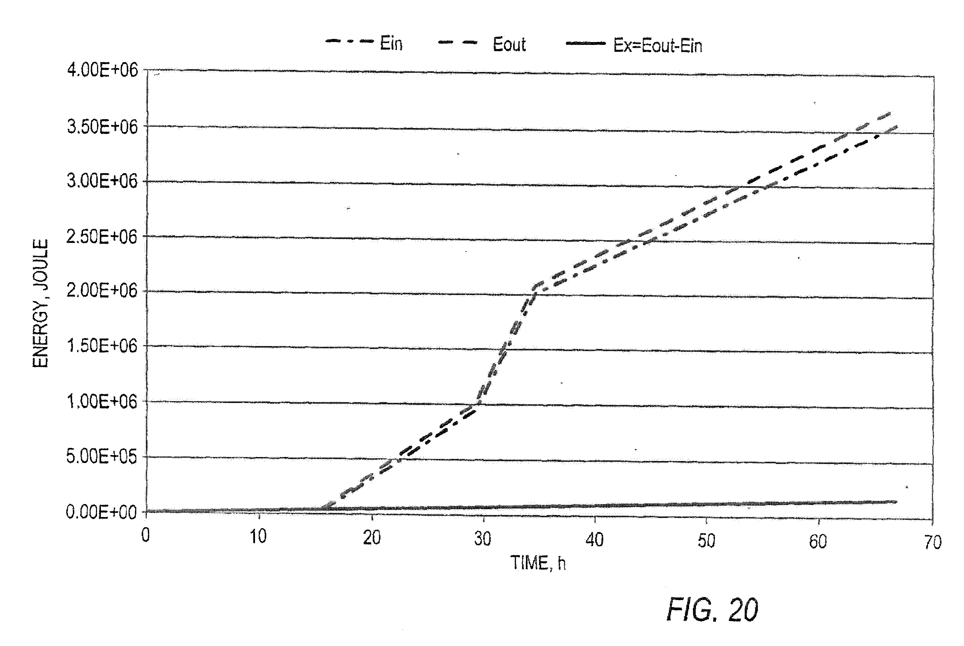

FIG. 19 shows that the cell temperature indicated by sensors T₁₋₃, and even the temperature of the wall of cylinder 204 indicated by sensor T₄, increased significantly about 57,600 seconds after the deloading portion of the experiment, while the bath temperature, indicated by sensor T_{B}, remained substantially constant. Finally, FIG. 20 shows the evolution, throughout the course of the experiment after deloading the cell, of the accumulated input energy E_{IN} invested into the cell, the output energy E_{OUT} removed from the cell, and the excess energy E_{X} generated by interactions of the deuterium in the cell.

As shown in FIG. 20, roughly 57,600 seconds after the deloading portion of the experiment was completed and the superwave of FIG. 16 began driving the cell, the cell began generating excess heat and continued doing so for approximately 288,000 seconds (i.e., 80 hours). This amount of excess heat could not be generated by any chemical reaction; it could only be generated by LENR.

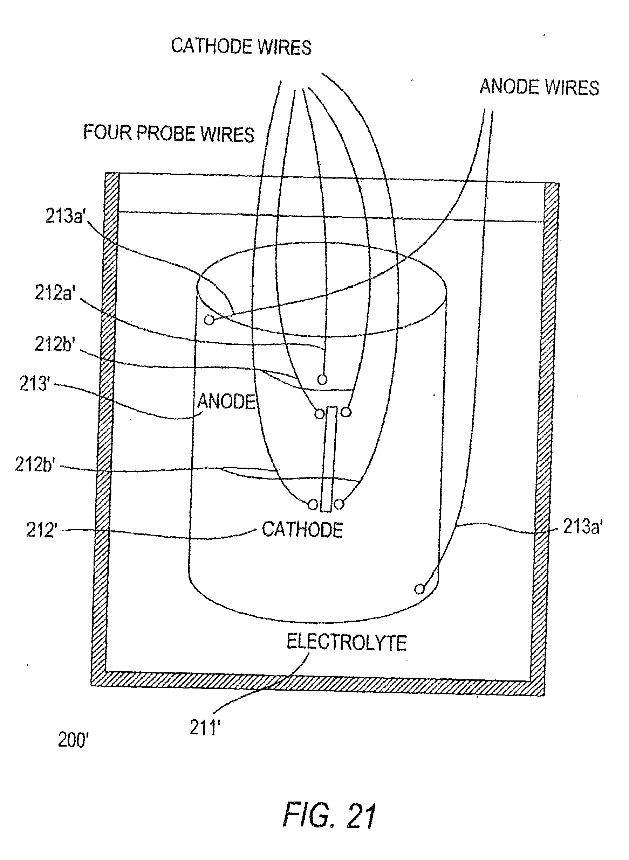

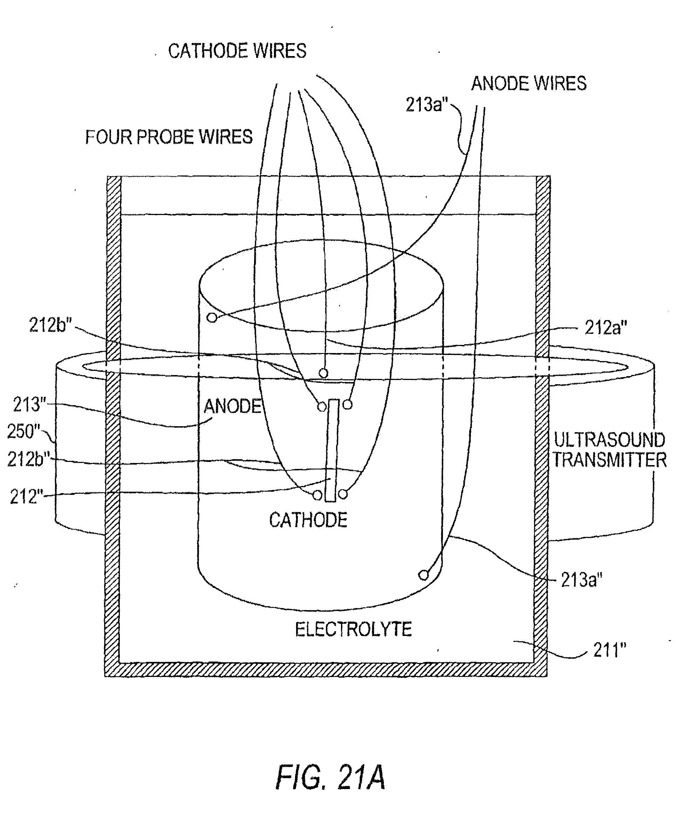

The following may be used as alternative embodiment of this cell with reference to FIG. 21. The cathode 212' of the electrolysis cell 200' may be in the form of a cylindrical rod or shell made of palladium foil having a thickness of between 50 and 100 microns, for example, while the anode 213' is in the form of a spiraled wire that surrounds the cathode, such that the cathode and anode are concentric, for example. The following may be used as yet another alternative embodiment of this cell with reference to FIG. 21A. This cell 200" may be an electrolysis cell, similar to cell 200' shown in FIG. 21, but that includes a surrounding ultrasound transmitter 250" that may transmit ultrasonic waves to induce cavitations on the surface of the cathode target, thereby intensifying the low energy nuclear reaction of the cell (described below in more detail). This geometry enables a radially converging current of ions to be focused on the cathode, thus obtaining higher current densities. Regardless of its geometric shape, the cathode may be a palladium film with a thickness of 5, 2.5, 1, or 0.2 microns, for example, deposited on a platinum, nickel, palladium, sapphire, TiO₂, Al₂O₃, or graphite substrate by sputtering, for example. The cathode may also be a multi-film of Pd and other materials, such as Ni or Ti.

### The Glow Discharge Cell:

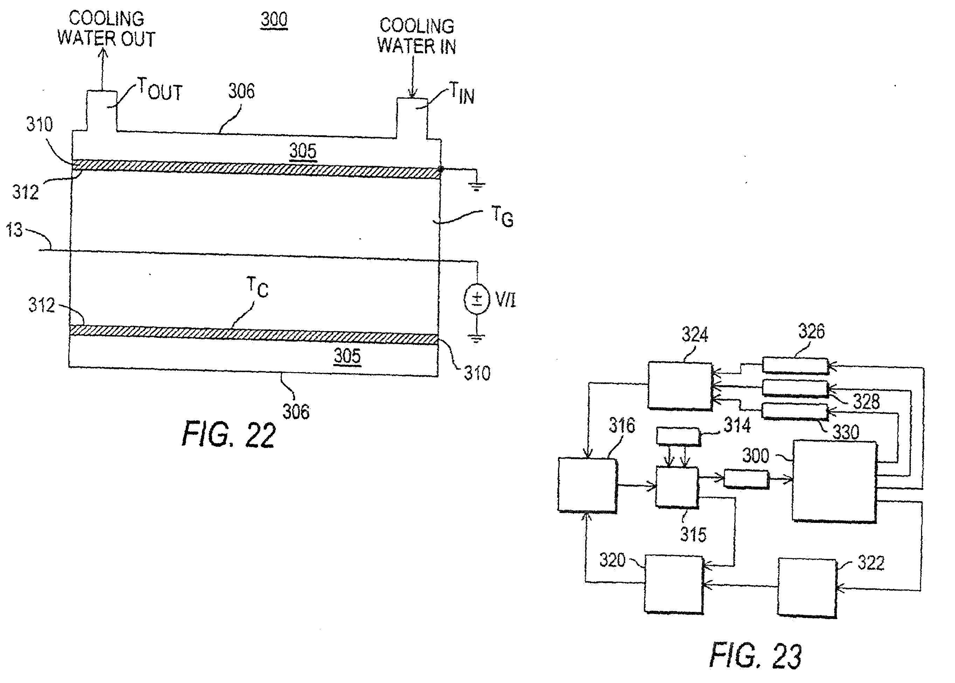

Referring now to FIG. 22, there is shown a partial sectional general layout of one preferable embodiment of a glow discharge cell 300 in accordance with the invention. Glow discharge cell 300 includes a hollow cylinder 310. For purposes of illustration, cylinder 310 may be stainless steel, although it may be any other suitable material which is resistant to water corrosion (e.g., copper, titanium, etc.), or non-metallic material (e.g., ceramics or sapphire plated with suitable metallic film (e.g., palladium, titanium, etc.)).

A region of metal along the interior surface of cylinder 310 provides cathode 312 of GD cell 300. Cathode 312 may be any suitable metal (e.g., titanium, palladium, nickel, etc.), or any suitable non-metallic material (e.g., ceramics or sapphire plated with suitable metallic film (e.g., palladium, titanium, etc.)). For purposes of illustration, cathode 312 may be palladium. A preferable method of providing cathode 312 along the inner surface of stainless steel, or any other suitable material, cylinder 310 is to vapor deposit or sputter palladium on the inner surface wall. In another method, a springy thin foil of palladium or a foil coated with palladium may be fitted inside the cylinder such that the foil presses tightly against the curved stainless steel surface using tightening rings such as Teflon™. Yet another method includes tightly pressing an ultrafine screen of palladium which retains palladium powder black or any others suitable powder (e.g., titanium, nickel, etc.) against the stainless steel cylinder. A central wire that runs through the hollow of cylinder 310 along its longitudinal axis provides anode 313 of cell 300. Anode 313 may be any suitable material (e.g., tungsten, thoriated tungsten, platinum, etc.), and of any suitable diameter (e.g., in the range of 0.1 to 1.0 millimeters). For purposes of illustration, wire anode 313 may be made of thoriated tungsten that is 0.1 millimeters thick.

A positive voltage between 300 and 1000 volts, which may depend upon the pressure of the cell, is applied to anode 313 while cathode 312 along the interior of cylinder 310 is maintained at ground potential. Before the initiation of the glow discharge of cell 300, the volume of cylinder 310 is filled with deuterium gas (e.g., hydrogen), which, preferably, has a pressure in the range of 1-100 Torr.. As shown in FIG. 22, the body of cylinder 310 is surrounded by housing 306 such that cooling water 305 may flow along the stainless steel spiral fins and the surrounding housing, in order to extract the heat generated by the normal glow discharge heating of the cell and to extract any amount of excess heat generated by deuterium-palladium reactions in the cell.

The small amount of thorium included in central wire anode 313 is slightly radioactive, and the small amount of radiation it emits ionizes some of the deuterium atoms. These ionized deuterium atoms facilitate the establishment of a discharge throughout the gas volume when the voltage applied to anode 313 is increased above a threshold level defined by the cell geometry and gas pressure. The electric potential of cell 300 (i.e., the electric field established by the voltage difference between cathode 312 and anode 313) forces the ionized deuterium atoms towards the outer cylindrical wall of the cell, thereby bombarding the palladium wall with deuterium atoms having high kinetic energy. The deuterium atoms diffuse into the palladium lattice and increase the loading factor of the cell. The loading factor is the ratio of the amount of deuterium atoms to the amount of palladium atoms.

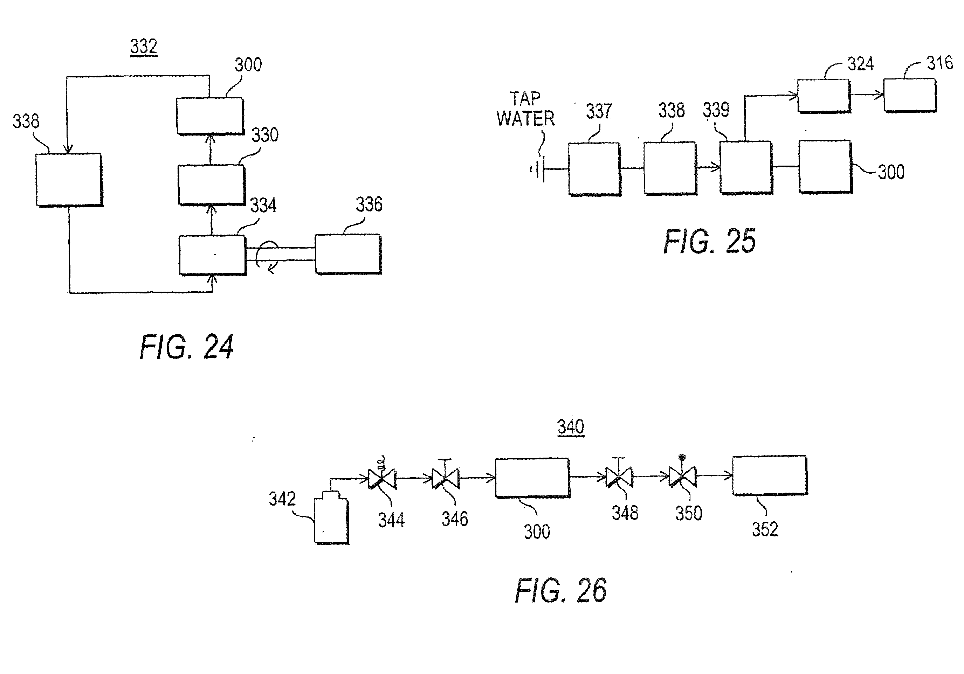

The glow discharge cell can have any configuration as long as a voltage potential is applied between a positive electrode and a negative or a grounded electrode. The electrodes can be a pair of plates of any geometry and can be mounted parallel to each other or can be concentric spheres. Referring now to FIG. 23, there is shown one preferable embodiment of a data acquisition system and low energy nuclear reaction power generator in accordance with the invention including glow discharge cell 300 of FIG. 25. In this generator, a d-c current or voltage source 314, which may be similar to sources 14 and 214, is provided. The output of source 314 is applied to anode 313 of the cell through an electronic modulator 315, which may be similar to modulators 15 and 215. Source 314 and modulator 315 may be combined into a constant current or voltage modulated power supply. The operation of modulator 315 is controlled by a programmed computer 316, which may be similar to computers 16 and 216, whereby the modulator yields voltage pulses whose amplitude and duration, as well as the duration of the intervals between pulses, are determined by the program. A second modulator 320 and a voltmeter 322 may be implemented in order to measure the resistance of cathode 312, similarly to modulator 20 and voltmeter 22 of FIG. 2, as described above. This can be done only if the foil on which the palladium is plated is not electrically conductive. So the resistance measurement will only be of the loaded film.

Preferably, a data logger 324 is included in the system in accordance with the invention to acquire various types of data about the glow discharge process of cell 300 and to provide this data to computer 316. Temperature sensor block 326, which may include a plurality of temperature sensors T_{IN} and T_{OUT} for the inlet and outlet cooling water temperature, T_{C} for the cell inner wall temperature, and T_{G} for the gas temperature are preferably included in the system to provide data logger 324 with the temperature of various elements of cell 300. Pressure transducer 328 is also preferably included in the system to provide data logger 324 with a measurement of the pressure of the gas in cylinder 310 of cell 300. Furthermore, flow meter 330 is also preferably included in the system to provide data logger 324 with the mass flow rate of water 305 flowing through the housing 306 of cell 300.

As described above, highly effective computer pulse pattern programs afford optimum results, resulting in the greatest amount of LENR heat at the palladium electrode. These can be determined empirically by modifying the program of computer 316 to find the most effective pattern and by modifying the program to be responsive to the resistance of the cathode and the various types of data provided by data logger 324. In one example of a method according to the invention, the change in resistance may be used to modify the modulating in order to maximize the atom-packing. A feedback signal representing the slope of the resistance may be used to optimize the relationship between any of the waves with respect to any of the other waves, the respective frequencies of the individual waves, the respective amplitudes of the individual waves, or any other suitable parameter.

Referring now to FIG. 24, there is shown one preferable embodiment of a water cooling system 332 in accordance with the invention that is preferably used with glow discharge cell 300. Cooling system 332 preferably includes peristaltic pump 334 in combination with motor 336 in order to provide successive wavelike contractions of the conduit opening through which water is forced from a bath water supply 338 into housing 306 of GD cell 300. Flow meter 330 may also be included in cooling system 332 of FIG. 24 in order to acquire data representative of the mass flow rate of water 305 within housing 306 of cell 300. Alternatively, tap water, which passes through softening column 337, flows through mass flow controller 339, which controls the flow rate and maintains it constant and measurable (see FIG. 25). The measured mass flow rate is fed to computer 316 via data logger 324, and then the cooling water flows through housing 306 of cell 300.

Referring now to FIG. 26, there is shown one preferable embodiment of a deuterium gas flow system 340 to maintain gas cell pressure constant in accordance with the invention that is preferably used with glow discharge cell 300. Gas flow system 340 preferably includes a deuterium gas cylinder 342 which provides deuterium gas to cell 300 via pressure regulator 344 and valve 346. Gas flow system 340 also preferably includes vacuum pump 352 which receives gas from cell 300 via valve 348 and manual needle valve 350. Alternatively, pressure regulator 344 can be replaced by an electronic gas mass pressure controller (not shown).

### Glow Discharge Cell LENR Power Generator Experiments:

The following examples, including the experiments conducted and results achieved, are provided for illustrative purposes only and are not to be construed as limiting upon the present invention.

In accordance with the present invention, a glow discharge cell similar to cell 300 of FIG. 25 was used for a parametric study of the effect of different control parameters on the response of the cell. One of the most important experimental parameters to be established was the effect of superwaving waves on changes in the current of deuterium atoms impacting the palladium and, thus, on the production of excess heat by the cell. The input power (in Watts) supplied to the cell is a product of the input voltage (in Volts) applied to the anode and the current (in Amperes). The output power (in Watts) provided by the cell is a product of the change in temperature of the cooling water from between the outlet and inlet of the cell, the mass flow rate of the cooling water, and the heat capacity of the cooling water. The difference between the output power and the input power is the excess heat generated by the cell. The time-integrated instantaneous input power is the total amount of energy invested into the glow discharge process, whereas the time-integrated output power is the total amount of energy removed from the cell. The difference between the total energy removed and the total energy invested is the excess energy generated by interactions of the deuterium.

However, before such a glow discharge cell is assembled for experimentation, certain pre-treatment steps are preferably taken for achieving the best results. For example, in preparation for the first GD cell experiment, the stainless steel cylinder was degreased by soaking it in a 90% Microclean™ solution, rinsing it with deionized water, rinsing it with absolute grade alcohol, and then by drying it well. Then, the vapor deposited (sputtering could also be applied) palladium film cathode of the cell was chosen to be about 1 micron in thickness and was plated directly on the inner surface of the stainless steel cylinder. No glow discharge cleaning was done prior to the vapor deposition because of the geometry of the specimen. The vapor deposition of the palladium on the inner surface of the stainless steel continued for about 2 hours and the stainless steel surface was not depassivated prior to the vapor deposition. Next, the cell was fully evacuated for at least 24 hours and then filled with deuterium gas pressure of about 5 bars absolute, three separate times. For preloading of the lattice, the cell was evacuated and then put under pressure of about 5 bars absolute for at least 24 hours or until pressure stabilized (i.e., the end of preloading).

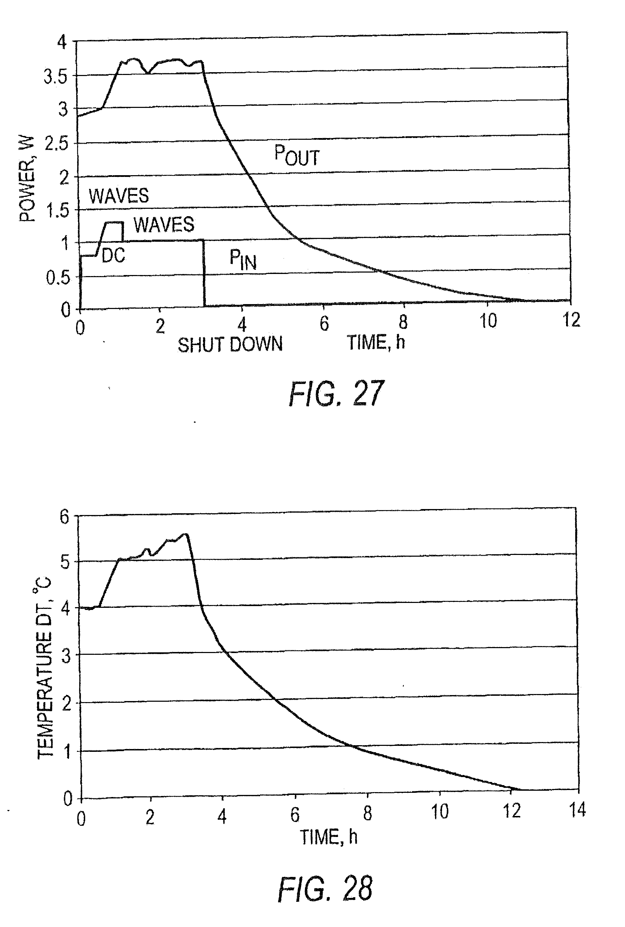

In a first experiment, which used a glow discharge cell similar to cell 300 and was pre-treated as described above, the effect of using a superwaving wave drive current on the production of excess heat was investigated. With reference to FIGS. 27-29, this first GD experiment began by applying to the cell a DC set up of 500 volts and 1.54 milliamps of current for an input power (P_{IN}) of 0.77 Watts. After 2000 seconds (i.e., 0.55 hours) of operation, the DC power stabilized, and then, superwaving waves were added to the drive of the cell.

As discussed above with reference to FIG. 1, for example, superwaving relates to the addition of waves and the superposition of waves on waves on waves. In this experiment, a carrier wave with a period of 50 seconds was firstly added to the DC drive, and then 9 sub-waves (i.e., minor waves) were added on the carrier wave with the bulk of these sub-waves occurring near the peak of the carrier wave. Next, 8 sub-sub-waves were modulated onto the peak of each of the 9 sub-waves, and then, finally, 7 sub-sub-sub-waves were modulated onto the peak of each of the 8 sub-sub-waves. In this experiment, the number of sub-waves on the peak of the carrier wave, the number of sub-sub-waves on the peaks of the sub-waves, and the number of sub-sub-sub-waves on the peaks of the sub-sub-waves were each held constant at 9, 8, and 7, respectively, and the period of the carrier wave was kept at 50 seconds.

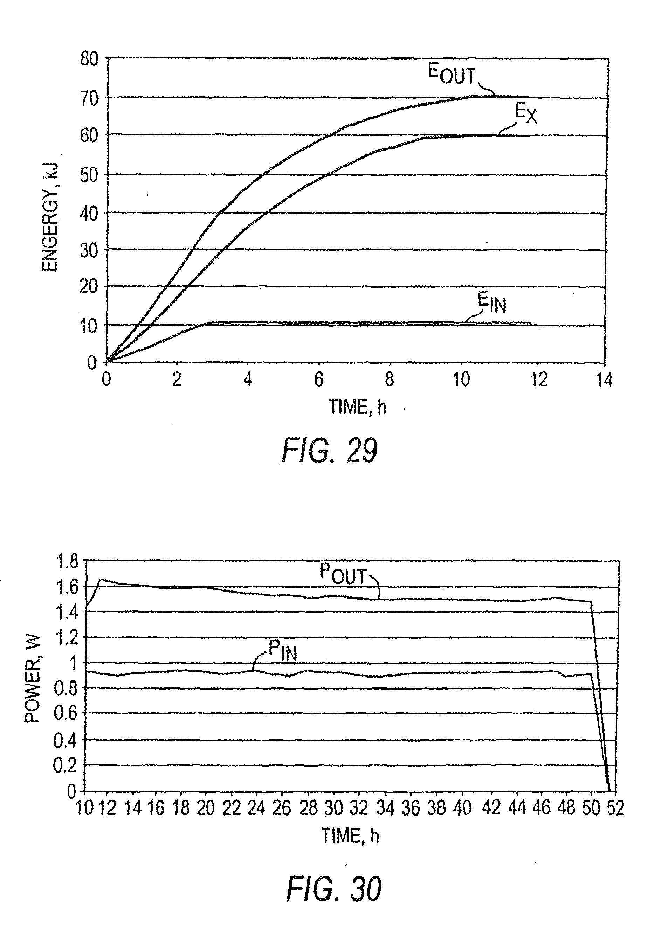

FIG. 27 shows the evolution of the input power P_{IN} supplied to the cell and the output power P_{OUT} provided by the cell throughout the course of this experiment. As shown, during the DC operation, the initial P_{IN} was measured to be 0.77 Watts and the P_{OUT} was measured to be 2.77 Watts. When the waves were added, P_{IN} increased to 0.95 Watts and P_{OUT} increased to 3.685 Watts. Therefore, during the DC operation, the Watts-Out/Watts-In was measured to be 3.60, and, during the superwaving operation, the Watts-Out/Watts-In was measured to be 3.88. FIG. 30 shows the evolution of the difference between the temperature of the cooling water at the outlet of the cell's housing (e.g., T_{OUT} of FIG. 22) and the temperature of the cooling water at the inlet of the cell's housing (e.g., T_{IN} of FIG. 22) throughout the course of the experiment. This is shown to be nearly proportional to P_{OUT}. Since, while the temperature difference increased, independently the flow rate slightly decreased.

FIG. 29 shows the evolution, throughout the course of this experiment, of the accumulated input energy E_{IN} invested into the cell during this experiment, the output energy E_{OUT} removed from the cell during the experiment, and the excess energy E_{X} generated by interactions of the deuterium in the cell during this experiment. Perhaps the most interesting result shown in FIG. 29 is the accumulated output energy divided by the accumulated input energy, because heat continued to be radiated out from the cell for about 10 hours after the glow discharge was shut off. Thus, the amount of output energy measured in Joules continued to increase for the 10 hours after the amount of input energy measured in Joules had reached a constant value (about 70 kilo-Joules). This measured ratio of E_{OUT}/E_{IN} is shown to have reached a value of 6.72. This is a very large generation of relative excess energy, of which there is no known precedent.

The continuation of heat generation for approximately 10,hours after shutdown of the glow discharge deserves particular attention. This, so called, "heat-after-death" provides a strong indication that the excess heat generated in this cell (i.e., glow discharge cell 300) is of a nuclear origin. Had there been no heat source other than the input power P_{IN}, based on experience, the change in cooling water temperature (i.e., T_{OUT} - T_{IN}) would substantially equal zero approximately 30 to 40 minutes after P_{IN} shutdown. Had all the deuterium in the cell been oxidized (supposing the vacuum was breached and air entered the cell, for example), the total chemical energy that would have been generated is estimated to be about 150 Joules. This is negligible as compared to the nearly 35,000 Joules generated as heat-after-death in this experiment. This analysis provides strong evidence that the heat-after-death and, therefore, most if not all of the excess energy comes from nuclear reactions.

However, it must be noted that, when the cell was opened at the conclusion of this experiment, it was noticed that the entire 1 micron thick palladium film that had been vapor deposited on the inside surface of the stainless cylinder had flaked off and lay at the bottom of the horizontal cylinder.

In a second experiment, the vapor deposited palladium film which provided the cathode of the cell in the first experiment was replaced with a palladium foil with a thickness of 100 microns. This foil was inserted within the stainless steel cylinder in a way that maximized the area in contact between the palladium foil and the curved stainless steel surface using Teflon™ rings which attached the foil to the stainless steel cell body surface.

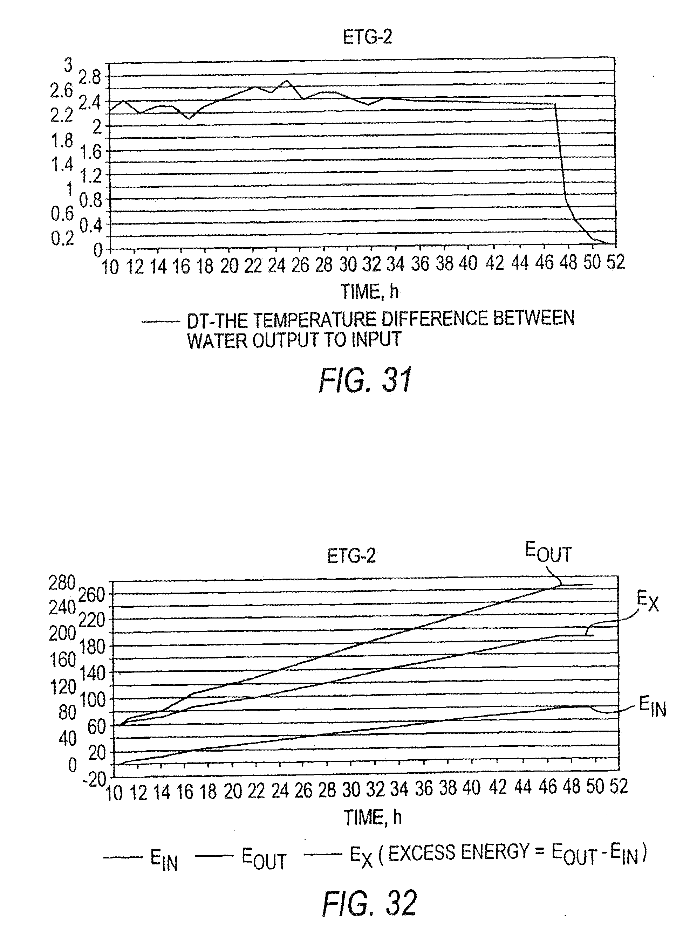

With reference to FIGS. 30-32, this second glow discharge experiment did not start by applying a DC setup signal, but instead just applied superwaving waves similar to those described above with reference to FIG. 27 to the glow discharge cell. FIG. 30 shows the evolution of the input power P_{IN} supplied to the cell and the output power P_{OUT} provided by the cell throughout the course of this experiment. As shown, the average P_{IN} was measured to be about 0.9 Watts and the P_{OUT} was measured to be about 1.5 Watts. Therefore, during the superwaving operation of this experiment, the Watts-Out/Watts-In was measured to be about 1.67. FIG. 31 shows the evolution of the difference between the temperature of the cooling water at the outlet of the cell's housing (e.g., T_{OUT} of FIG. 22) and the temperature of the cooling water at the inlet of the cell's housing (e.g., T_{IN} of FIG. 22) throughout the course of the experiment.

FIG. 32 shows the evolution, throughout the course of this second GD experiment, of the accumulated input energy E_{IN} invested into the cell during this experiment, the output energy E_{OUT} removed from the cell during this experiment, and the excess energy E_{X} generated by interactions of the deuterium in the cell during this experiment. The measured ratio of E_{OUT}/E_{IN} is shown to have reached a value of 1.64.

The following steps may be taken in alternative embodiments of this experiment of the invention: repeating either of the first two experiments with currents up to at least 200 milliamps; roughening the surface of the cylinder to be coated with palladium or another suitable metal such as titanium and conducting the experiment with currents up to at least 200 milliamps; roughening the surface of a foil of palladium, or another suitable metal such as titanium, used as the cathode and conducting the experiment with currents of up to at least 200 milliamps; coating the surface of the cylinder with palladium or another suitable metal such as titanium using a sputtering process rather than a vapor deposition process; applying a cathode made of palladium or another suitable metal such as titanium using a vapor deposition or sputtering process onto a cylinder made of stainless steel, copper, or nickel, while using a gas of H₂, a gas mixture of 2-3% helium in H₂, or a gas mixture of 2-3% helium in D₂, and while using currents up to at least 200 milliamps; and applying a cathode made of palladium or another suitable metal such as titanium using a vapor deposition or sputtering process onto a stainless steel, copper, or nickel foil or onto a palladium or palladium-nickel gauze inner-sleeve filled with palladium black powder, and inserting the foil or inner-sleeve into a cylinder made of stainless steel, copper, or nickel, while using a gas of H₂, a gas mixture of 2-3% helium in H₂, or a gas mixture of 2-3% helium in D₂, and while using currents up to at least 200 milliamps.

Moreover, in yet an other alternative embodiment of this experiment of the invention, the functions of ionization of the gas molecules into ions and of the acceleration of these ions onto the target may be separated. The ionization may be accomplished by an energy source that provides either electron bombardment, microwave heating, Ohmic heating, or RF power that is coupled to the gas volume by an antenna to create a plasma of preferably singly ionized deuterium atoms. The acceleration may be accomplished by establishing a voltage difference between the anode that interfaces the plasma and the cathode target. Preferably, the plasma will be made of deuterium ions while the cathode target will have palladium on its side facing the plasma. A train of pulsed electrical packets having a cluster of pulses superimposed on each packet may be applied across the electrode pair to cause a correspondingly pulsed current to flow between the electrode pair, whereby ionized hydrogenous atoms are accelerated toward the material cathode electrode such that each packet of pulses produces a surge of the hydrogenous ions that bombard the material cathode electrode. Successive surges of the hydrogenous ions may produce a dense packing of the hydrogenous atoms in the material cathode electrode and cause glow discharge.

### The Catalyst Cell:

Wheres Case's catalyst experiments were set to measure the temperature of a cell for a given input power, the catalyst cell system of the present invention is designed to measure the input power required to obtain a given steady state temperature. That is, the test for excess heat is based on a comparison of the power consumption of an external heater that is required for maintaining a certain cell temperature when the tested catalyst is in contact with D_{2'} versus the power consumption of the external heater that is required for maintaining the same cell temperature when the tested catalyst is in contact with H₂, which is used as a reference. The difference between the power consumption levels required to maintain the same steady state temperature is proportional to the excess heat produced by the catalyst. When excess heat is generated due to LENR, the temperature tends to increase. In order to maintain a constant temperature inside the cell, the temperature controller reduces the input power.

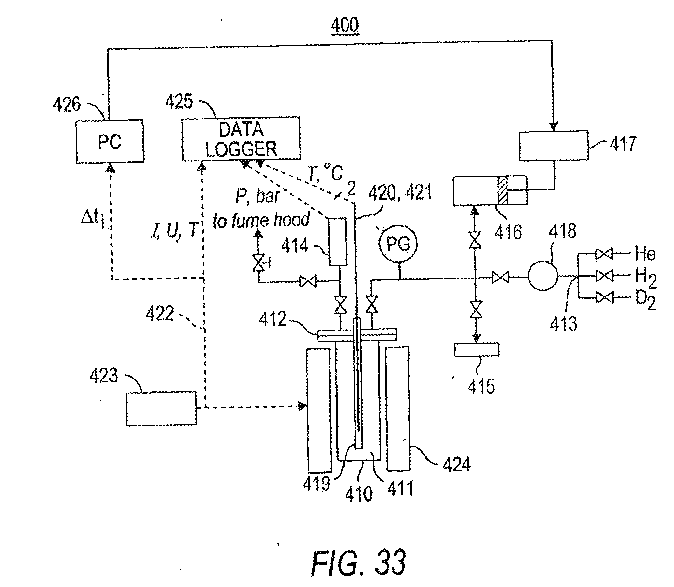

Referring now to FIG. 33, there is shown one preferable embodiment of the general layout of a catalyst cell system 400 in accordance with the present invention. System 400 includes a cylindrical vessel 410 for containing a catalyst 411 to be tested. For purposes of illustration, vessel 410 may be stainless steel, although it may be any other suitable material (e.g., ceramics, etc.).

Gland flange 412 is provided by vessel 410 and is preferably equipped with two ¼-inch Swage-lock™ tube fittings for connecting vessel 410 to a gas manifold 413, a pressure transducer 414, a vacuum pump 415, and a pressure modulating system involving a piston 416 derived by preferably servo motor 417 or other driving means. A high-temperature Chemraz-615™ O-ring, that is able to withstand up to 315° Celsius, is preferably used for sealing. A thermocouple well 419 is welded to flange 412 and is immersed in the cell. Three gas pipelines (e.g., for hydrogen, deuterium, and helium) are preferably connected to gas manifold 413. The pressure is set by a high-sensitivity pressure regulator 418.

Preferably, three thermocouples 420, 421, and 422 are introduced into well 419, with one of the thermocouples connected to a temperature controller 423 and the two others set at different depths in well 419 to measure the temperature gradient along the axis of the cell. Since the cell is preferably rather narrow and relatively long, it is assumed that the temperature across the cross-sectional area of the cell is not much different than the temperature across the cell at the axis of vessel 410. The cell is heated by a specially designed tubular furnace 424 that has a maximum power of about 500 Watts, for example.

Power is preferably supplied to the furnace by a temperature controller system 423. The measurements of the input power, pressure, and temperature are preferably performed by a data logger 425 that may be similar to data logger 324 of FIG. 23. The data logged by the data logger is stored, treated, and analyzed by a computer 426.

### Catalyst Cell LENR Power Generator Experiments:

Firstly, the catalyst to be tested is preferably dried in a vacuum oven at an elevated temperature and then cooled down in argon gas atmosphere to room temperature. Next, the dried catalyst is transferred to a catalyst cell system of the present invention. Then, the cell is preferably evacuated by vacuum pump 415 of the system and filled with hydrogen by gas manifold 413 of the system. This evacuation and hydrogen-filling process is preferably repeated three times.

A catalyst test of the present invention may now be conducted as follows. The cell is preferably heated up to a temperature set point. Preferably, this may be done by heating the cell up to 200° Celsius under hydrogen atmosphere at 2 bars. During this heating process, the power consumption of the cell decreases while the temperature of the cell approaches the temperature set-point. After a certain amount of time the set-point is reached and the power consumption is stabilized at a certain value. This power consumption value is taken as a reference value. After another length of time, preferably about 24 hours, the hydrogen is replaced by deuterium in the cell. This is preferably done by evacuating the hydrogen for at least 30 minutes at 0.1 Torr. and then by filling the cell with deuterium. In consideration of the understanding that adsorption of hydrogen on the catalyst at the temperature set-point is negligible, it is assumed that one evacuation and filling cycle is enough to guarantee a substantially total gas exchange into the catalyst pores. Then, the power consumption of the cell filled with deuterium is monitored for a suitable amount of time, preferably about 10 days.

This catalyst test may be performed using any potential catalyst and with any suitable heating temperature set-point. Furthermore, the catalyst cell system of the present invention may be equipped with a programmable pressure modulating system (i.e., piston 416 and motor 417) to preferably generate pressure superwaving waves in a suitable frequency range, lower than 10.0 Hz, for example, in order to enhance the excess heat generation.

The following different types of possible catalysts may be used as alternative embodiments in catalyst tests of the present invention: 0.5 or 1% palladium, titanium, nickel, or ruthenium on activated carbon powder; 1% palladium, titanium, nickel, or ruthenium on activated carbon pellets; 0.5% palladium, titanium, nickel, or ruthenium on alumina pellets; 3% palladium, titanium, nickel, or ruthenium on extruded carbon; 0.5% palladium, titanium, nickel, or ruthenium on titanium oxide; and a titanium sponge, for example. In commercial catalyst low energy nuclear reaction generators, when excess heat is to be generated using the optimal catalysts, the input furnace power will not be reduced, but, rather, the excess heat will be removed from the cell by cooling the system with water or steam, for example, in order to maintain constant temperature during the process.

The following may be used as an alternative embodiment of this cell. In this embodiment, an electrical conducting catalyst is placed inside a flow-type calorimetric cell, where the catalyst is heated by electrical current, whereas the produced heat is removed by cooling water. The catalyst is exposed to a flux of hydrogenous molecules at a set flow rate and pressure. The hydrogenous gas is being supplied through porous electrical conductors.

A similar cell for electrical conducting powders was suggested by J.Patterson et al. at the ICCF-10 conference from August, 2003 in their presentation entitled "Observations of a Porous Packed Bed Gaseous Deuterium Filled Mini-Reactor." However, the Patterson cell did not have a calorimeter to measure the power output. The calorimeter setup of the catalyst cell is similar to that of the glow discharge cell described in FIGS. 22 and 23.

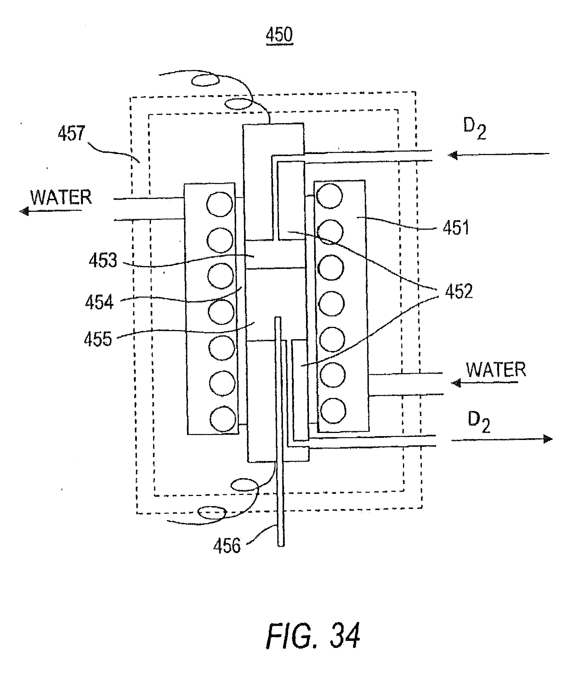

FIG. 34 shows a general layout of the preferred embodiment of this flow-type catalyst cell of the present invention. Cell 450 includes a vessel 451, which may be made of stainless-steel or any other non-corroding metal, with a water cooling jacket, two electrical conductors 452 with a multilayer 325-mesh filter 453 are electrically insulated from vessel 451 by a Teflon™ tube 454. The catalyst 455 is placed inside a Teflon™ insert and is packed as much as practical to minimize its electrical resistance. The Teflon™ insert with catalyst 455 is placed between conductors 452 and pressed by them. The catalyst temperature is measured by thermocouple 456 passed through one of conductors 452. Viton O-rings are preferably used for sealing off the gas and water cooling elements. The cell is preferably insulated by a thermal insulator envelope 457.

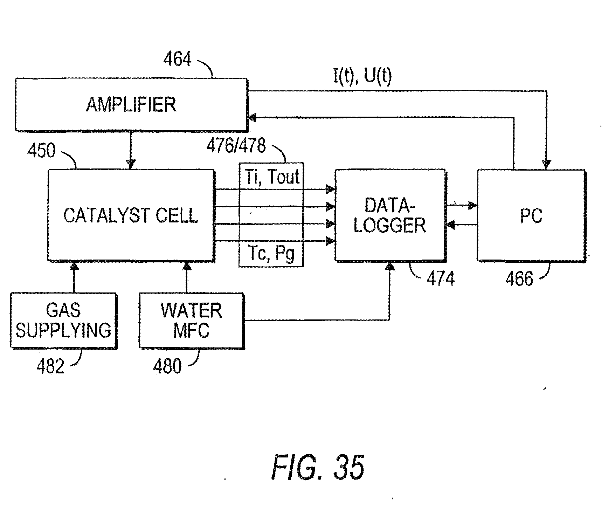

Referring now to FIG. 35, there is shown one preferred embodiment of a data acquisition system and low energy nuclear reaction power generator in accordance with the invention including catalyst cell 450 of FIG. 34. In this generator, a d-c current or voltage amplifier 464, which may be similar to previously described sources 14 and 214, is provided. The output of amplifier 464 is applied to cell 450. The operation of the amplifier 464 is controlled by a programmed computer 466, which may be similar to previously described computers 16 and 216, and which yields voltage pulses whose amplitude and duration, as well as the duration of the intervals between pulses, are determined by the program.

Preferably, a data logger 474 is included in the system in accordance with the invention to acquire various types of data about the catalyst-deuterium interaction to provide this data to computer 466. Temperature sensor block 476, which may include a plurality of temperature sensors (e.g., T_{IN} and T_{OUT} for the inlet and outlet cooling water temperature, Tc for the catalyst temperature, etc.), is preferably included in the system to provide data logger 474 with the temperature of various elements of cell 450. Pressure transducer 478 is also preferably included in the system to provide data logger 474 with a measurement of the pressure of the gas (P_{G}) in the cell 450. Furthermore, mass flow controller 480 is also preferably included in the system to provide a constant and stable flow rate of the water flowing through the cooling jacket of cell 450, and gas pressure supplier 482 is also preferably included in the system to provide a constant and stable supply of gas pressure in cell 450. Constant gas pressure and constant flow rate are preferably provided by a sensitive pressure regulator on the up-stream and a needle valve on the down-stream.

### The High Pressure Cell:

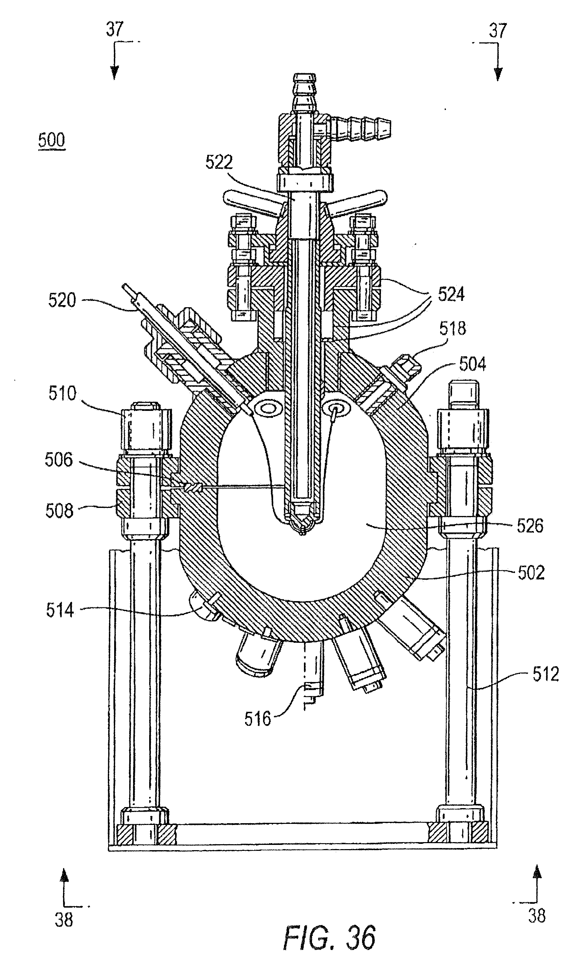

Referring now to FIGS. 36-40, there is shown one preferable embodiment of a low energy nuclear reaction power generator that includes a high pressure electrolytic ultrasonic cell 500 in accordance with the present invention. This cell is designed to carry-out experiments with stimulation provided by superwaving energy waves, by ultrasonic waves, and by ultrasonically-induced cavitations. The cell is also designed to carry-out experiments with different types of electrode configurations in a broad range of pressures (i.e., at least up to 10 MPa) and temperatures (i.e., at least up to 450° Celsius). This enables experimentation with many combinations of external effects over a broad range of conditions. The high pressure electrolytic ultrasonic cell LENR power generator of FIG. 36 can be run with either high pressure gas loading or electrolytic loading of deuterium into a cathode electrode target of different geometries (i.e., hemispherical) of cell 500.

The ultrasonic cell LENR power generator includes a vessel with hemispherical sections 502 and 504. The vessel may be made of any suitable material (e.g., stainless steel, titanium, etc.), and may be of any suitable thickness. For purposes of illustration, vessel sections 502 and 504 may be made of stainless steel which is 3.5 centimeters thick. Vessel sections 502 and 504 are preferably connected through copper sealing ring 506 and flanges 508 by fixing parts 510 and 512. Fixing part 512 simultaneously supports the cell.

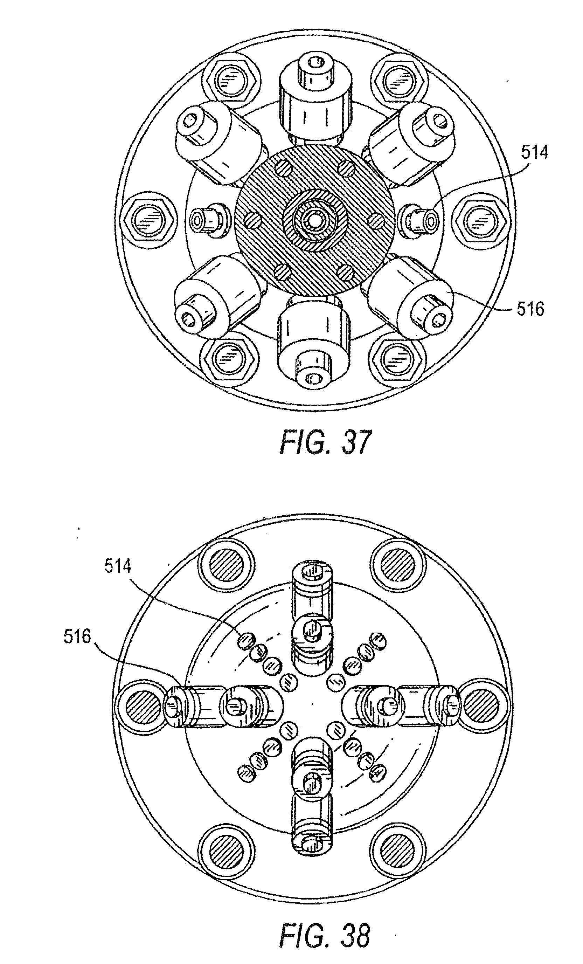

Ultrasonic radiators 514 and 516 are preferably attached to lower vessel section 502. Altogether, in the preferred embodiment of FIG. 36, there are eight (8) radiators 516 provided that can operate at a frequency of 50 kHz or 100 kHz, and sixteen (16) radiators 514 provided that can operate at a frequency of 1 MHz in cell 500, as shown in FIGS. 37 and 38. The ultrasonic radiators may be powered by generators of their respective frequencies.

Upper vessel section 504 is preferably equipped with pipes 518, 520, and 522. Pipe 518 may supply deuterium to the cell under pressure, and pipe 520 may serve as a safety valve and monitors the pressure inside cell 500. Cooling pipe 522 may be introduced into cell 500 through central seal 524.

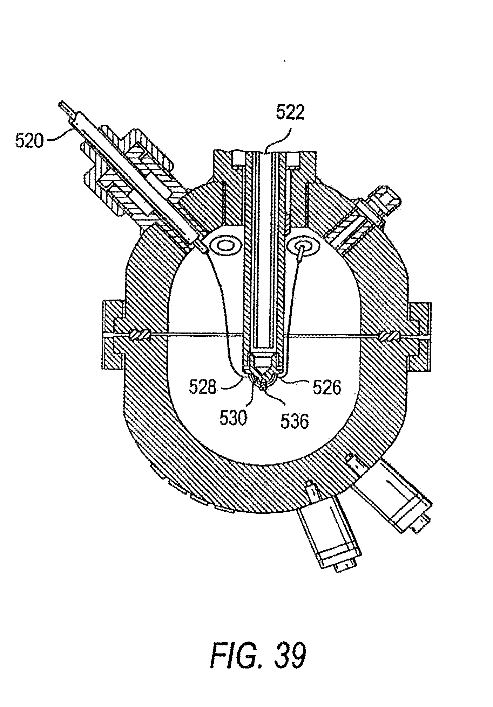

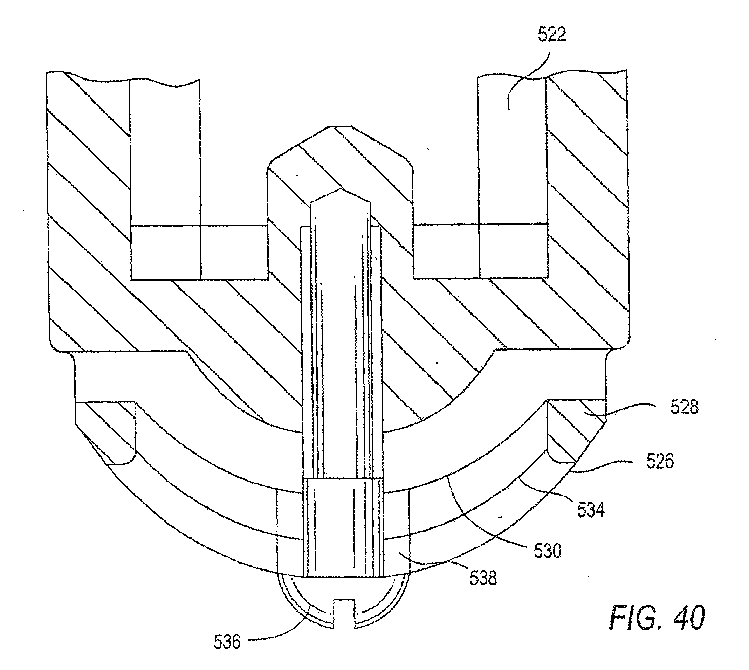

Cathode target 526 is preferably attached to the lower end of cooling pipe 522, as is shown by the enlarged views of this portion of cell 500 in FIGS. 39 and 40. The target system includes cathode 526, quartz insulator 528 with anode 530 leaning thereon.
Anode 530 is preferably a hemispherical segment of platinum foil with a thickness in the range of 50-100 micrometers, and may be of any suitable thickness. Cathode 526 is preferably a hemispherical segment of palladium foil with a thickness of 50-100 micrometers, but may be of any suitable material (e.g., titanium, etc.), and may be of any suitable thickness. Cathode 526 is preferably attached to insulator 528.

A grid 534 is preferably provided between anode 530 and cathode 526. Screw 536 preferably fixes anode 530, cathode 526, and grid 534 to cooling pipe 522, and quartz washers 538 preferably insulate electrodes 530 and 526 from each other and from screw 536.

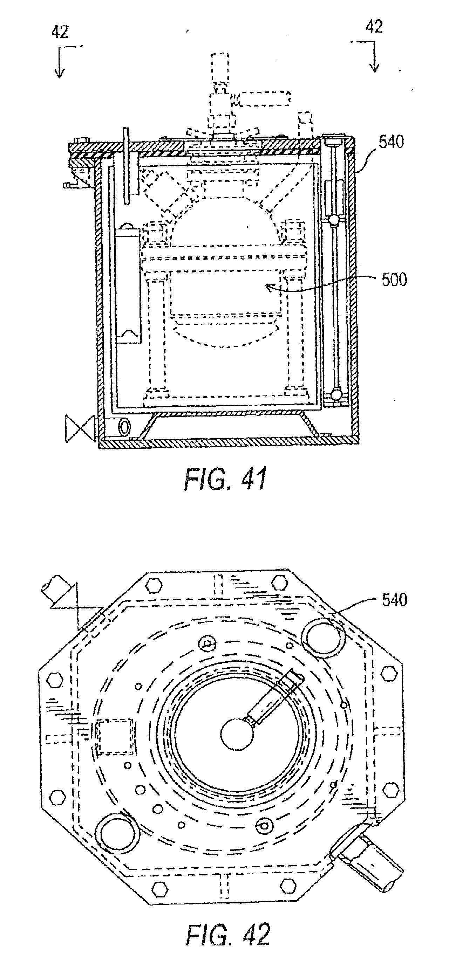

The high pressure electrolytic ultrasonic cell LENR power generator of the present invention also preferably includes housing 540, as shown in FIGS. 41 and 42. Housing 540 preferably houses the apparatus of FIGS. 36-40 during experiments to provide a substantially constant ambient temperature.

### High Pressure Cell LENR Power Generator Experiments:

In accordance with the present invention, the high pressure electrolytic ultrasonic cell LENR power generator shown in FIGS. 36-42 may preferably be used for parametric studies of the effects of the following control parameters on the response of cell 500: pressure in the cell 500; temperatures of cathode 526, grid 534, the electrolyte in the vicinity of cathode 526 and near the internal surface of the cell wall of section 502; temperature of water flowing in and out of cooling pipe 522 and its flow rate; temperature of the transformer oil near the external surface of the cell wall and near the bottom of the cell; temperature of water flowing in and out of calorimeter jacket or housing 540; frequency and amplitude operations of ultrasonic radiators 514 and 516; frequency and amplitude of electric power delivered to a cathode 526; potential difference between anode 530 and cathode 526; and superwaving current waves through the anode-cathode system.

In a first experiment to study the effect of cavitation on excess heat generation, cathode 526 may be loaded at upper vessel section 504 by deuterium gas under high pressure and at a high temperature superwaving wave, for example. The loaded cathode may then be cooled and lowered into lower vessel section 502, which may be filled with a liquid electrolyte (e.g., D₂O and LiOD), for example. Vessel section 502 may be filled to the required level during cell assembly, for example. Then, DC and superwaving wave drives may be applied to electrodes 530 and 526, as described in detail above with respect to other embodiments of the invention. Finally, ultrasonic excitation of the superwaving type may similarly be applied by radiators 514 and 516 in the vicinity of the surface of cathode target 526 with waves in a frequency range between 50 kHz and 1 MHz, for example.

It is well-known that at frequencies of about 1 MHz, cavitation is substantially absent. However, ultrasonic waves radiated at this frequency would preferably induce cavitations on the surface of the cathode target 526 (i.e., result in the excitation of deuterium atom clusters on the surface of cathode target), thereby intensifying the LENR rate, as Takahasi predicted in 1991 by the model of multi-particle interaction, for example.

On the other hand, ultrasonic waves radiated around 50 kHz would preferably result in the inducement of cavitation, thereby creating microcracks on the surface of cathode target 526. High electrical potential could be formed across these microcracks, leading to a local acceleration of deuterium ions that may enhance the LENR of the generator. There is a large amount of experimental evidence that LENR takes place in a limited number of active sites on the cathode target surface and that such active sites can become inactive due to impurity depositions or other as yet not known phenomena. Therefore, another preferable effect of cavitation near the surface of cathode target 526 would be the continual cleansing of the surface and the creation of new active sites thereon. Modulating the frequency and amplitude of the radiated ultrasonic waves to be superwaving waves would preferably result in providing the specific wave required for achieving each of these effects of cavitation.

The high pressure electrolytic ultrasonic cell LENR power generator of FIGS. 36-42 preferably provides new operating domains during electrolysis experiments similar to the ones described above in reference to FIGS. 5-9. Particularly important with respect to these embodiments is this generator's ability to perform experiments at high temperatures. There is evidence that high temperature can significantly increase the probability for and rate of excess heat generation. Also important is the ability to pre-load the cathode with deuterium in the gas phase at high waving temperatures and pressures.

While there have been shown preferred embodiments of low energy nuclear reaction power generators, it is to be understood that many changes may be made therein without departing from the spirit and scope of the invention. Thus, one may use silicon instead of platinum as the anode of an electrolytic cell. Moreover, an electrode pair may be formed by concentric tubes, rather than by a strip surrounded by a coil as illustrated in the electrolytic cell of FIG. 2. One skilled in the art will appreciate that the present invention can be practiced by other than the described embodiments, which are presented for purposes of illustration and not of limitation, and the present invention is only limited by the claims which follow. Embodiments of the invention can be described with reference to the following numbered clauses, with preferred features laid out in the dependent clauses:
Clause 1: An apparatus for generating a low energy nuclear reaction involving a material and hydrogenous atoms, the apparatus comprising: a low energy nuclear reaction cell containing an electrically conductive electrolyte having enveloped therein an anode-cathode electrode pair, the cathode electrode being formed of the material; means that is adapted to apply across the electrode pair a train of pulsed electrical packets, a cluster of pulses being superimposed on each packet, to cause a correspondingly pulsed current to flow between the electrode pair, causing the electrolyte to dissociate, whereby oxygen is released at the anode electrode while the hydrogenous atoms migrate toward the material cathode electrode, each packet of pulses producing a surge of the hydrogenous atoms which are forced into the material cathode electrode, successive surges producing a dense packing of the hydrogenous atoms in the material cathode electrode; and wherein each pulse in the cluster of pulses has an amplitude that is proportional to an instantaneous amplitude of a major wave associated with the train of pulsed electrical packets, and wherein each pulse in the cluster of pulses has a frequency that is proportional to an instantaneous frequency of the major wave associated with the train of pulsed electrical packets.
Clause 2: An apparatus for generating a low energy nuclear reaction involving a material and hydrogenous atoms, the apparatus comprising: a low energy nuclear reaction cell containing a hydrogenous gas having enveloped therein an anode-cathode electrode pair, the cathode electrode being formed of the material; means that is adapted to apply across the electrode pair a train of pulsed electrical packets, a cluster of pulses being superimposed on each packet, to cause a correspondingly pulsed current to flow between the electrode pair, whereby ionized hydrogenous atoms are accelerated toward the material cathode electrode, each packet of pulses producing a surge of the hydrogenous ions which bombard the material cathode electrode, successive surges producing a dense packing of the hydrogenous atoms in the material cathode electrode; and wherein each pulse in the cluster of pulses has an amplitude that is proportional to an instantaneous amplitude of a major wave associated with the train of pulsed electrical packets, and wherein each pulse in the cluster of pulses has a frequency that is proportional to an instantaneous frequency of the major wave associated with the train of pulsed electrical packets.
Clause 3: The apparatus of clause 2, wherein said apparatus is adapted to cause glow discharge.
Clause 4: An apparatus for generating a low energy nuclear reaction involving a material and hydrogenous atoms, the apparatus comprising: a low energy nuclear reaction cell containing a hydrogenous gas, an energy source, and an anode-cathode electrode pair, the cathode electrode being formed of the material; the energy source is adapted to ionize the hydrogenous gas; and means that is adapted to apply across the electrode pair a train of pulsed electrical packets, a cluster of pulses being superimposed on each packet, to cause a correspondingly pulsed current to flow between the electrode pair, causing the hydrogenous atoms to migrate toward the material cathode electrode, each packet of pulses producing a surge of the hydrogenous atoms which bombard the material cathode electrode, successive surges producing a dense packing of the hydrogenous atoms in the material cathode electrode; and wherein each pulse in the cluster of pulses has an amplitude that is proportional to an instantaneous amplitude of a major wave associated with the train of pulsed electrical packets, and wherein each pulse in the cluster of pulses has a frequency that is proportional to an instantaneous frequency of the major wave associated with the train of pulsed electrical packets.
Clause 5: The apparatus of clause 4, wherein said energy source is an Ohmic heating source.
Clause 6: The apparatus of clause 4, wherein said energy source is a radiofrequency energy source.
Clause 7: The apparatus of clause 4, wherein said energy source is a microwave heating source.
Clause 8: The apparatus of clause 4, wherein said energy source causes electron bombardment.
Clause 9: An apparatus for increasing the generation of excess heat from a low energy nuclear reaction between a catalyst and a hydrogenous gas, the apparatus comprising: a low energy nuclear reaction cell containing the catalyst; means that is adapted to fill the system with the hydrogenous gas; means that is adapted to heat the cell to a first temperature; and means that is adapted to provide in the cell a train of pulsed pressure packets, a cluster of pressure pulses being superimposed on each pressure packet, to enhance the excess heat generation, wherein each pressure pulse in the cluster of pressure pulses has an amplitude that is proportional to an instantaneous amplitude of a major wave associated with the train of pulsed pressure packets, and wherein each pressure pulse in the cluster of pressure pulses has a frequency that is proportional to an instantaneous frequency of the major wave associated with the train of pulsed pressure packets.
Clause 10: An apparatus for generating a low energy nuclear reaction involving a material and hydrogenous atoms, the apparatus comprising: a low energy nuclear reaction cell having an anode-cathode electrode pair, a first section containing a hydrogenous gas, and a second section containing an electrically conductive electrolyte, the cathode electrode being formed of the material; means that is adapted to load the cathode electrode with the gas in the first section at a first pressure and at a first temperature; means that is adapted to place the loaded cathode electrode in the second section; means that is adapted to apply across the electrode pair a train of pulsed electrical packets, a cluster of pulses being superimposed on each packet, to cause a correspondingly pulsed current to flow between the electrode pair, causing the electrolyte to dissociate, whereby oxygen is released at the anode electrode while the hydrogenous atoms migrate toward the material cathode electrode, each packet of pulses producing a surge of the hydrogenous atoms which are forced into the material cathode electrode, successive surges producing a dense packing of the hydrogenous atoms in the material cathode electrode, wherein each pulse in the cluster of pulses has an amplitude that is proportional to an instantaneous amplitude of a major wave associated with the train of pulsed electrical packets, and wherein each pulse in the cluster of pulses has a frequency that is proportional to an instantaneous frequency of the major wave associated with the train of pulse electrical packets; and means that is adapted to apply to the cathode electrode a train of pulsed ultrasonic wave packets, a cluster of ultrasonic pulses being superimposed on each ultrasonic wave packet, to excite the hydrogenous atoms and the material atoms in the material cathode electrode, thereby intensifying the interaction, wherein each ultrasonic pulse in the cluster of ultrasonic pulses has an amplitude that is proportional to an instantaneous amplitude of a major wave associated with the train of pulsed ultrasonic wave packets, and wherein each ultrasonic pulse in the cluster of ultrasonic pulses has a frequency that is proportional to an instantaneous frequency of the major wave associated with the train of pulsed ultrasonic wave packets.
Clause 11: An apparatus for generating a low energy nuclear reaction involving a material and hydrogenous atoms, the apparatus comprising: a low energy nuclear reaction cell adapted to cause glow discharge, said cell containing a hydrogenous gas having enveloped therein an anode-cathode electrode pair, the cathode electrode being formed of the material.
Clause 12: An apparatus for generating a low energy nuclear reaction involving a material and hydrogenous atoms, the apparatus comprising: a low energy nuclear reaction cell containing an electrically conductive electrolyte having enveloped therein an anode-cathode electrode pair, the cathode electrode being formed of the material; means that is adapted to apply across the electrode pair a train of pulsed electrical packets, a cluster of pulses being superimposed on each packet, to cause a correspondingly pulsed current to flow between the electrode pair, causing the electrolyte to dissociate, whereby oxygen is released at the anode electrode while the hydrogenous atoms migrate toward the material cathode electrode, each packet of pulses producing a surge of the hydrogenous atoms which are forced into the material cathode electrode, successive surges producing a dense packing of the hydrogenous atoms in the material cathode electrode, wherein each pulse in the cluster of pulses has an amplitude that is proportional to an instantaneous amplitude of a major wave associated with the train of pulsed electrical packets, and wherein each pulse in the cluster of pulses has a frequency that is proportional to an instantaneous frequency of the major wave associated with the train of pulse electrical packets; and means that is adapted to apply to the cathode electrode a train of pulsed ultrasonic wave packets, a cluster of ultrasonic pulses being superimposed on each ultrasonic wave packet, to excite the hydrogenous atoms and the material atoms in the material cathode electrode, thereby intensifying the interaction, wherein each ultrasonic pulse in the cluster of ultrasonic pulses has an amplitude that is proportional to an instantaneous amplitude of a major wave associated with the train of pulsed ultrasonic wave packets, and wherein each ultrasonic pulse in the cluster of ultrasonic pulses has a frequency that is proportional to an instantaneous frequency of the major wave associated with the train of pulsed ultrasonic wave packets.
Clause 13: A method for generating a low energy nuclear reaction involving a material and hydrogenous atoms, the method being implemented on a low energy nuclear reaction cell containing an electrically conductive electrolyte having enveloped therein an anode-cathode electrode pair, the cathode electrode being formed of the material, the method comprising: applying across the electrode pair a train of pulsed electrical packets, a cluster of pulses being superimposed on each packet, to cause a correspondingly pulsed current to flow between the electrode pair, causing the electrolyte to dissociate, whereby oxygen is released at the anode electrode while the hydrogenous atoms migrate toward the material cathode electrode, each packet of pulses producing a surge of the hydrogenous atoms which are forced into the material cathode electrode, successive surges producing a dense packing of the hydrogenous atoms in the material cathode electrode; and wherein each pulse in the cluster of pulses has a maximum amplitude that is proportional to an instantaneous amplitude of a major wave associated with the train of pulsed electrical packets, and wherein each pulse in the cluster of pulses has a maximum frequency that is proportional to an instantaneous frequency of the major wave associated with the train of pulsed electrical packets.
Clause 14: A method for generating a low energy nuclear reaction involving a material and hydrogenous atoms, the method being implemented on a low energy nuclear reaction cell containing a hydrogenous gas having enveloped therein an anode-cathode electrode pair, the cathode electrode being formed of the material, the method comprising:
   applying across the electrode pair a train of pulsed electrical packets, a cluster of pulses being superimposed on each packet, to cause a correspondingly pulsed current to flow between the electrode pair, whereby ionized hydrogenous atoms are accelerated toward the material cathode electrode, each packet of pulses producing a surge of the hydrogenous ions which bombard the material cathode electrode, successive surges producing a dense packing of the hydrogenous atoms in the material cathode electrode;
   and wherein each pulse in the cluster of pulses has a maximum amplitude that is proportional to an instantaneous amplitude of a major wave associated with the train of pulsed electrical packets, and wherein each pulse in the cluster of pulses has a maximum frequency that is proportional to an instantaneous frequency of the major wave associated with the train of pulsed electrical packets.
Clause 15: The method of clause 14, wherein said applying a train of pulsed electrical packets across the electrode pair causes glow discharge.
Clause16: A method for generating a low energy nuclear reaction involving a material and hydrogenous atoms, the method being implemented on a low energy nuclear reaction cell containing a hydrogenous gas, an energy source, and an anode-cathode electrode pair, the cathode electrode being formed of the material, the method comprising:
   ionizing the hydrogenous atoms; and applying across the electrode pair a train of pulsed electrical packets, a cluster of pulses being superimposed on each packet, to cause a correspondingly pulsed current to flow between the electrode pair, causing the hydrogenous ions to migrate toward the material cathode electrode, each packet of pulses producing a surge of the hydrogenous ions which bombard the material cathode electrode, successive surges producing a dense packing of the hydrogenous atoms in the material cathode electrode; and wherein each pulse in the cluster of pulses has a maximum amplitude that is proportional to an instantaneous amplitude of a major wave associated with the train of pulsed electrical packets, and wherein each pulse in the cluster of pulses has a maximum frequency that is proportional to an instantaneous frequency of the major wave associated with the train of pulsed electrical packets.
Clause 17: The method of clause 16, wherein said energy source is an Ohmic heating source.
Clause 18: The method of clause 16, wherein said energy source is a radiofrequency energy source.
Clause 19: The method of clause 16, wherein said energy source is a microwave heating source.
Clause 20: The method of clause 16, wherein said energy source causes electron bombardment.
Clause 21: A method for increasing the generation of excess heat from a low energy nuclear reaction between a catalyst and a hydrogenous gas, the method being implemented on a low energy nuclear reaction cell containing the catalyst, the method comprising: filling the system with the hydrogenous gas; heating the cell to a first temperature; and generating in the cell a train of pulsed pressure packets, a cluster of pressure pulses being superimposed on each pressure packet, to enhance the excess heat generation, wherein each pressure pulse in the cluster of pressure pulses has an amplitude that is proportional to an instantaneous amplitude of a major wave associated with the train of pulsed pressure packets, and wherein each pressure pulse in the cluster of pressure pulses has a frequency that is proportional to an instantaneous frequency of the major wave associated with the train of pulsed pressure packets.
Clause 22: A method for generating a low energy nuclear reaction involving a material and hydrogenous atoms, the method being implemented on a low energy nuclear reaction cell having an anode-cathode electrode pair, a first section containing a hydrogenous gas, and a second section containing an electrically conductive electrolyte, the cathode electrode being formed of the material, the method comprising: loading the cathode electrode with the gas in the first section at a first pressure and at a first temperature; placing the loaded cathode electrode in the second section; applying across the electrode pair a train of pulsed electrical packets, a cluster of pulses being superimposed on each packet, to cause a correspondingly pulsed current to flow between the electrode pair, causing the electrolyte to dissociate, whereby oxygen is released at the anode electrode while the hydrogenous atoms migrate toward the material cathode electrode, each packet of pulses producing a surge of the hydrogenous atoms which are forced into the material cathode electrode, successive surges producing a dense packing of the hydrogenous atoms in the material cathode electrode, wherein each pulse in the cluster of pulses has a maximum amplitude that is proportional to an instantaneous amplitude of a major wave associated with the train of pulsed electrical packets, and wherein each pulse in the cluster of pulses has a maximum frequency that is proportional to an instantaneous frequency of the major wave associated with the train of pulsed electrical packets; and applying to the cathode electrode a train of pulsed ultrasonic wave packets, a cluster of ultrasonic pulses being superimposed on each ultrasonic wave packet, to excite the hydrogenous atoms and the material atoms in the material cathode electrode, thereby intensifying the interaction, wherein each ultrasonic pulse in the cluster of ultrasonic pulses has an amplitude that is proportional to an instantaneous amplitude of a major wave associated with the train of pulsed ultrasonic wave packets, and wherein each ultrasonic pulse in the cluster of ultrasonic pulses has a frequency that is proportional to an instantaneous frequency of the major wave associated with the train of pulsed ultrasonic wave packets.
Clause 23: A method for generating a low energy nuclear reaction involving a material and hydrogenous atoms, the method being implemented on a low energy nuclear reaction cell adapted to cause glow discharge and containing a hydrogenous gas having enveloped therein an anode-cathode electrode pair, the cathode electrode being formed of the material.
Clause 24: A method for generating a low energy nuclear reaction involving a material and hydrogenous atoms, the method being implemented on a low energy nuclear reaction cell containing an electrically conductive electrolyte having enveloped therein an anode-cathode electrode pair, the cathode electrode being formed of the material, the method comprising: applying across the electrode pair a train of pulsed electrical packets, a cluster of pusses being superimposed on each packet, to cause a correspondingly pulsed current to flow between the electrode pair, causing the electrolyte to dissociate, whereby oxygen is released at the anode electrode while the hydrogenous atoms migrate toward the material cathode electrode, each packet of pulses producing a surge of the hydrogenous atoms which are forced into the material cathode electrode, successive surges producing a dense packing of the hydrogenous atoms in the material cathode electrode, wherein each pulse in the cluster of pulses has a maximum amplitude that is proportional to an instantaneous amplitude of a major wave associated with the train of pulsed electrical packets, and wherein each pulse in the cluster of pulses has a maximum frequency that is proportional to an instantaneous frequency of the major wave associated with the train of pulsed electrical packets; and applying to the cathode electrode a train of pulsed ultrasonic wave packets, a cluster of ultrasonic pulses being superimposed on each ultrasonic wave packet, to excite the hydrogenous atoms and the material atoms in the material cathode electrode, thereby intensifying the interaction, wherein each ultrasonic pulse in the cluster of ultrasonic pulses has an amplitude that is proportional to an instantaneous amplitude of a major wave associated with the train of pulsed ultrasonic wave packets, and wherein each ultrasonic pulse in the cluster of ultrasonic pulses has a frequency that is proportional to an instantaneous frequency of the major wave associated with the train of pulsed ultrasonic wave packets.

## Claims

1. A method for generating thermal energy in an electrolytic cell (100; 200) containing an electrically conductive electrolyte (11; 211) and an anode-cathode electrode pair (12, 13; 212, 213) immersed in the electrolyte, the method comprising:
providing a modulated current power supply (14, 15; 214, 215) connected to the cell;
generating in the power supply a modulated current comprising a predetermined superwaves pattern of current, wherein the superwaves pattern includes a major current wave (W₁) having a predetermined period and a plurality of minor current waves (W₂, W₃, W₄) superimposed on the major current wave forming a train of electrical current packets;
applying the train of electrical current packets from the modulated power supply to the electrode pair (13, 12; 213, 212); and
providing ultrasonic excitation to the cathode electrode (12; 212) during application of the train of electrical current packets to the electrode pair.

2. The method of claim 1, wherein the minor electrical current waves (W₂, W₃, W₄) are generated during upward phases of the major wave (W₁).

3. The method of claim 1 or claim 2, wherein the train includes a relaxation period corresponding to at least a portion of each downward phase of the major wave (W₁).

4. The method of claim 3, wherein the minor current waves (W₂, W₃, W₄) in the electrical current packets are turned off during the relaxation period.

5. The method of any preceding claim, wherein the frequency of each of the minor waves differs from the frequency of each other minor wave.

6. The method of any preceding claim, wherein each of the minor waves (W₂, W₃, W₄) has an instantaneous frequency that is proportional to an instantaneous amplitude of the major wave (W₁).

7. The method of any preceding claim, wherein the cathode electrode includes palladium or a palladium alloy.

8. The method of any preceding claim, wherein the anode includes platinum.

9. The method of any preceding claim, wherein each packet has superimposed thereon a cluster of waves, wherein each wave in the cluster of waves has a maximum amplitude that is proportional to an instantaneous amplitude of the major wave (W₁) associated with the train of electrical current packets, and wherein each wave in the cluster of waves has a maximum frequency that is proportional to an instantaneous amplitude of the major wave (W₁) associated with the train of electrical current packets.

10. The method of any preceding claim, wherein the ultrasonic excitation is provided by applying to the cathode electrode a train of ultrasonic packets in a superwaves pattern.

11. An apparatus for generating thermal energy in an electrolytic cell (100; 200) having a cathode electrode (12; 212) and an anode electrode (13; 213) immersed in an electrically conductive electrolyte (11; 211), the apparatus comprising:
a modulated current power supply (14, 15; 214, 215) connected to the cathode and anode electrodes;
a computer (16; 216) connected to the power supply, the computer being programmed to generate within the power supply and supply to the electrodes a superwaves pattern of current, wherein the superwaves pattern includes a major current wave (W₁) having a predetermined period and a plurality of minor current waves (W₂, W₃, W₄) superimposed on the major current wave forming a train of electrical current packets supplied to the electrodes; and
an ultrasonic transmitter (250"; 514, 516) coupled to the cell (100; 200) to provide ultrasonic excitation to the cathode electrode (12; 212) during application of the train of electrical current packets to the electrode pair.

12. The apparatus of claim 11, wherein the power supply is controlled by the computer such that the minor electrical current waves (W₂, W₃, W₄) are generated during upward phases of the major wave (W₁).

13. The apparatus of claim 11 or claim 12, wherein the train includes a relaxation period corresponding to at least a portion of each downward phase of the major wave (W₁).

14. The apparatus of claim 13, wherein the minor current waves (W₂, W₃, W₄) in the electrical current packets are turned off during the relaxation period.

15. The apparatus of any of claims 11 to 14, wherein the frequency of each of the minor waves differs from the frequency of each other minor wave.

16. The apparatus of any of claims 11 to 15, wherein each of the minor waves (W₂, W₃, W₄) has an instantaneous frequency that is proportional to an instantaneous amplitude of the major wave (W₁).

17. The apparatus of any of claims 11 to 16, wherein the cathode electrode includes palladium or a palladium alloy.

18. The apparatus of any of claims 11 to 17, wherein the anode includes platinum.

19. The apparatus of any of claims 11 to 18, wherein each packet has superimposed thereon a cluster of waves, wherein each wave in the cluster of waves has a maximum amplitude that is proportional to an instantaneous amplitude of the major wave (W₁) associated with the train of electrical current packets, and wherein each wave in the cluster of waves has a maximum frequency that is proportional to an instantaneous amplitude of the major wave (W₁) associated with the train of electrical current packets.

20. The apparatus of any of claims 11 to 19, wherein the ultrasonic transmitter (250",514, 516) generates ultrasonic waves in a superwaves pattern.
